# EUROPEAN PATENT APPLICATION

(11) **EP 2 426 762 A1**
(43) Date of publication of application: **07.03.2012**
(21) Application number: 10769761.7
(22) Date of filing: 27.04.2010
(51) Int. Cl.: H01M 4/86, H01M 8/10

(54) **GAS DIFFUSION LAYER FOR FUEL CELL**

(30) Priority: 01.05.2009 JP 2009112320
(71) Applicant: Nissan Motor Co., Ltd., Kanagawa 220-8623 (JP); W.L. Gore & Associates, Co., Ltd., Tokyo 108-0075 (JP)
(72) Inventor: KATO, Hiroshi, Tokyo 1080075 (JP); NOMI, Haruo, Tokyo 1080075 (JP); NAMBA, Takafumi, Tokyo 1080075 (JP); TAKANE, Tomoyuki, Tokyo 1080075 (JP); OKUYAMA, Yozo, Kanagawa 243-0123 (JP); SUGINO, Manabu, Kanagawa 243-0123 (JP); EHAMA, Isao, Kanagawa 243-0123 (JP); KODAMA, Kazufumi, Kanagawa 243-0123 (JP)
(74) Representative: Grünecker, Kinkeldey, Stockmair & Schwanhäusser
(86) International application number: PCT/JP2010/057502
(87) International publication number: WO 2010/126063

(57) **Abstract**

To provide a means of further improving the cell's start-up capability (below-freezing-point-start-up capability) in a low temperature environment in the gas diffusion layer used in the fuel cell. It is a gas diffusion layer for fuel cell having a pore volume of micropores of 2.0 x 10⁻⁴ cm³/cm² or higher.

## Description

### [Technical Field]

The present invention relates to a gas diffusion layer for a fuel cell as well as to a membrane electrode assembly for a fuel cell and a fuel cell based thereon.

### [Background Technology]

The polymer electrolyte fuel cell ("PEFC") is configured to have a plurality of single-cells stacked up for generating electric power. Each single-cell has a membrane electrode assembly ("MEA") comprising (1) polymer electrolyte membrane (e.g., Nafion (trademark) membrane), (2) a pair of (anode and cathode) catalyst layers (sometimes referred to as "electrode catalyst layer") that sandwich it, and (3) a pair of gas diffusion layers ("GDL") that sandwich them for diffusing the supplied gas. The MEA contained in each single-cell is electrically connected to an adjacent single-cell via a separator. The fuel cell stack is thus constituted of those laminated and connected single-cells. The fuel cell stack then can function as a power generating means suitable for various applications. In such a fuel cell stack, the separator provides a function of electrically connecting the adjacent single-cells with each other as mentioned above. In addition, a gas passage is generally provided on the surface of the separator that faces the MEA. The gas passage serves as a gas supplying means for supplying a fuel gas as well as an oxidant gas.

To describe the power generating mechanism of PEFC briefly, the fuel gas (e.g., hydrogen gas) is supplied to the anode side of the single-cell and the oxidant gas (e.g. , air or oxygen) is supplied to the cathode side during the operation of the PEFC. As a result, an electrochemical reaction occurs that can be described in the following reaction formula to generate electricity on anode and cathode, respectively.

(Formula 1) Anode reaction: H₂ → 2H⁺ + 2e⁻ (1)

Cathode reaction: 2H⁺ + 2e⁻ + (1/2) O₂ → H₂O (2)

Consequently, water is generated on the cathode side of each cell constituting the fuel cell during the power generation of the fuel cell. The generated water is discharged outside of the fuel cell without being consumed in the cathode reaction.

In a lower temperature environment such as experienced during winter, the temperature of the fuel cell at the time of shutdown can drop extremely low compared to the proper operating temperature. In case of a fuel cell operating in a low temperature environment below the freezing point, in particular, water generated in the electrode catalyst layer can freeze before it is discharged outside. As a result of freezing of the generated water, the reaction gas passage may get clogged up, consequently developing a problem of deterioration of the power generating performance of the fuel cell. It may cause also a problem of requiring a large amount of energy in order to elevating the temperature of the fuel cell to restart the fuel cell in a short period of time.

In order to solve such problems, Patent Document 1 discloses a technology of improving the water-absorbing capacity of the hydrogen electrode reaction layer (anode side catalyst layer) by means of using a water-absorbent material. It is claimed that the freezing inside the gas passage of the air electrode reaction layer (cathode side catalyst layer) during a low temperature operation can be prevented and the fuel cell system can be started up easily even in such a low temperature environment, as the excess water dwelling in the air electrode reaction layer can be moved to the anode side and absorbed in such a design.

Also, Patent Document 2 discloses a membrane electrode assembly provided with a large water dispersion layer having a porous capacity larger than that of an air electrode reaction layer between the air electrode reaction layer(cathode side catalyst layer) and the air diffusion layer (gas diffusion layer). According to this disclosure, it is possible to prevent the freezing in the gas passage of the air electrode reaction layer during the low temperature operation by causing the water dwelling in the gas passage of the air electrode layer to disperse into the fine pores, thus making it to possible to start up the fuel cell system easily under a low temperature environment. The document discloses that it is possible to use an embodiment having more than 0.3 µ1/cm² of fine pores with pore diameters of 1 nm to 1 µm as such a water dispersion layer.

On the other hand, as an example of using activated carbon as the gas diffusion layer, a polymer electrolyte membrane containing activated carbon capable of suppressing generation of radicals provided in an intermediate layer of the catalyst layer is disclosed (Patent Document 3). The invention described in Patent Document 3 is **characterized in that** it is using the activated carbon having the capability of suppressing and decomposing the generation of hydrogen peroxide in the intermediate layer. In other words, it claims that it is capable of decomposing the hydrogen peroxide generated as a side reaction into water and oxygen, thus guaranteeing a stable operation of the cell for a long term continuously (paragraphs [0055] - [0056]).

### [Prior Art Documents]

### [Patent Document]

[Patent Document 1] Publication of Japanese Patent Application 2005-174765
[Patent Document 2] Publication of Japanese Patent Application 2005-174768
[Patent Document 3] Publication of Japanese Patent Application 2005-339962

### [SUMMARY]

### [Problems to be solved by the invention]

In the technology disclosed by Patent Documents 1 and 2, however, the intended freezing prevention in the gas passage in a low temperature environment is insufficient because the diameter of pores existing in the water-absorbent material and the water dispersion layer is not properly controlled. As a result, it is still difficult to guarantee the start-up capability under a low temperature environment (below-freezing-point-start-up capability) for the fuel cell using such a water-absorbent material or a water dispersion layer.

Also, the technology described in Patent Document 3 is primarily based on the consideration of the damage of hydrogen peroxide occurring on the air electrode (cathode) side, and has no consideration on the below-freezing-point-start-up capability relative to the fine pore diameter and the fine pore volume. In addition, the assembly described in Patent Document 3 has the activated carbon in the intermediate layer of the air electrode side (paragraph [0061]).

Therefore, the present invention is intended to provide a means of further improving the cell's start-up capability (below-freezing-point-start-up capability) in a low temperature environment in the gas diffusion layer used in the fuel cell.

### [Means for solving problems]

The inventors of the present invention have endeavored to solve the problems mentioned above. As a consequence, they found that the existence of micropores, in which freezing is prevented even in a lower temperature environment, is the key for preventing the freezing of water inside the gas passage. In other words, they found that it is possible to improve the below-freezing-point-start-up capability of the cell by suppressing the freezing of water inside the gas passage by increasing the pore volume of the micropores in the gas diffusion layer.

Such a gas diffusion layer for the fuel cell according to the present invention has a pore volume of the micropores of 2.0 x 10⁻⁴ cm³/cm² or higher.

### [Effect of the invention]

According to the present invention, the freezing of the water absorbed into the micropores can be prevented in a low temperature environment below the freezing point by means of using the gas diffusion layer having a specified pore volume of micropores or more in the fuel cell, and then the below-freezing-point-start-up capability of the cell can be improved.

### [Brief description of drawing]

Fig. 1 is a schematic view showing the basic configuration of a polymer electrolyte fuel cell ("PEFC") according to an embodiment of the present invention.
Fig. 2A is a pattern diagram showing a gas diffusion layer according to an embodiment of the present invention containing a granular water-absorbent material and a granular conductive support.
Fig. 2B is a pattern diagram showing a gas diffusion layer according to another embodiment of the present invention containing a granular water-absorbent material and a granular conductive support.
Fig. 2C is a pattern diagram showing a gas diffusion layer according to yet another embodiment of the present invention containing a granular water-absorbent material and a granular conductive support.
Fig. 2D is a pattern diagram showing a gas diffusion layer according to yet another embodiment of the present invention containing a granular water-absorbent material.
Fig. 3A is a pattern diagram showing a gas diffusion layer according to an embodiment of the present invention containing a granular water-absorbent material and a fibrous conductive support.
Fig. 3B is a pattern diagram showing a gas diffusion layer according to an embodiment of the present invention containing a granular water-absorbent material, a fibrous conductive support, and a granular conductive support.
Fig. 4A is a pattern diagram showing a gas diffusion layer according to an embodiment of the present invention using a fibrous water-absorbent material.
Fig. 4B is a pattern diagram showing a gas diffusion layer according to another embodiment of the present invention containing a fibrous water-absorbent material and a granular conductive support.
Fig. 5 is a pattern diagram showing a gas diffusion layer according to an embodiment of the present invention containing a substrate layer and a microporous layer.
Fig. 6 is a conceptual drawing of a vehicle equipped with a fuel cell stack according to an embodiment of the present invention.
Fig. 7A is a graph showing the relation between the pore volume of micropores and the duration of power generation (-20°C, 40 mA/cm²) in single-cells prepared for evaluation purpose in Examples 1-4 and Comparison Examples 1 and 2.
Fig. 7B is a graph showing the relation between the pore volume and the duration of power generation (-20°C, 40 mA/cm²) in single-cells prepared for evaluation purpose in Examples 1-4 and Comparison Examples 1 and 2.
Fig. 8 is a graph showing the relation between the pore volume of micropores and the duration of power generation (-20°C, 40 mA/cm²) in single-cells prepared for evaluation purpose in Example 5 and Comparison Example 3.
Fig. 9 is a graph showing the relation between the pore volume of micropores and the duration of power generation (-20°C, 80 mA/cm²) in single-cells prepared for evaluation purpose in Examples 1-3 and Comparison Examples 1 and 2.
Fig. 10 is a graph showing the relation between the pore volume of micropores and the duration of power generation (-20°C, 80 mA/cm²) in single-cells prepared for evaluation purpose in Example 5 and Comparison Example 3.
Fig. 11 is a graph showing the relation between the pore volume of micropores and the duration of power generation (-20°C, 100 mA/cm²) in single-cells prepared for evaluation purpose in Examples 1-3 and Comparison Examples 1 and 2.
Fig. 12 is a graph showing the relation between the pore volume of micropores and the duration of power generation (-20°C, 100 mA/cm²) in single-cells prepared for evaluation purpose in Example 5 and Comparison Example 3.
Fig. 13 is a graph showing the relation between the pore volume of micropores and the duration of power generation (-20°C, 40 mA/cm²) in single-cells prepared for evaluation purpose in Examples 6-8.
Fig. 14 is a graph showing the relation between the pore volume of micropores and the duration of power generation (-20°C, 80 mA/cm²) in single-cells prepared for evaluation purpose in Examples 6-8.
Fig. 15 is a graph showing the relation between the pore volume of micropores and the duration of power generation (-20°C, 100 mA/cm²) in single-cells prepared for evaluation purpose in Examples 6-8.

### [Mode for carrying out the invention]

### (Gas diffusion layer)

One aspect of the invention is a gas diffusion layer for a fuel cell (hereinafter referred to simply as "gas diffusion layer" as well in some cases) having a pore volume of micropores of 2.0 x 10⁻⁴ cm³/cm² or more.

In fuel cells of prior art, it was tried to prevent the freezing of water in the gas passage by means of providing a water-absorbent material and a water dispersion layer, but there was no attempt of controlling the pore size of the water-absorbent material and the water dispersion layer. In general, fine pores are classified into micropores (pore diameter: 2 nm or less), mesopore (pore diameter: greater than 2 nm and less than 50 nm), and macropore (pore diameter: greater than 50 nm). However, various sized of pores including micropores, mesopores and macropores existed in the water-absorbent material and the water dispersion layer contained in the gas diffusion layer of prior art. After closely examining the below-freezing-point-start-up capability relative to the fine pore diameter and the fine pore volume, the inventors of the present invention found out that the existence of micropores, in which freezing is prevented even in a lower temperature environment, is the key for preventing the freezing of water inside the gas passage. For example, even if the pore volume of pores in the water dispersion layer is high as in the case of Patent Document 2, the freezing of water in the gas passage may occur if there is a lot of mesopores and macropores exist, i.e., the pore volume of micropores is small. In Patent Document 3 mentioned above, although it provides activated carbon in the intermediate layer, no attention is made as to the relation between the pore volume of micropores and the prevention of the freezing of water in the gas passage in a low temperature environment that should be achieved by the particular activated carbon. Therefore, there has been a problem that it is still difficult to guarantee the cell's start-up capability (below-freezing-point-start-up capability) in a low temperature environment.

On the contrary, the gas diffusion layer according to the present invention has a pore volume of micropores more than the specified amount. Such a pore volume of micropores may be achieved by the any method. A desired pore volume is achieved preferably by formulating a sufficient amount of water-absorbent material having micropores (with pore diameters less than 2 nm). As such, there is an increased amount of pores that prevent the freezing of water even below the freezing point, in particular at -20°C, so that it is possible to sustain a long duration period of power generation even in a below freezing point start-up. Thus, a self start-up in a lower temperature environment becomes possible, which allows the cell to start up more quickly. Although it is not quite clear why the duration period of power generation can be extended in the below-freezing-point-start-up operation by the gas diffusion layer having a pore volume of micropores as described above, it can be inferred as follows. The present invention shall not be construed to be limited by the following inference. In case of a fuel cell located in a low temperature environment below the freezing point, the water generated in the cathode catalyst layer is absorbed in locations where electrolyte exists, i.e., the cathode or anode catalyst layer, the electrolytic membrane, etc. However, if the amount of water exceeds its capacity, it overflows into vacant holes of the catalyst layer, freezes, and clogs the diffusion passage of the reaction gas, thus reducing resultantly the power generating capacity of the fuel cell. On the contrary, if a sufficient amount of micropores is provided in the gas diffusion layer as in case of the present invention, the water generated during the operation can be sustained without freezing to be efficiently absorbed by the micropores. Therefore, the freezing of water in the places that contribute to the aforementioned reactions can be suppressed and prevented, thus allowing the reaction gas to be efficiently diffused into the catalyst layer even in a low temperature environment, providing a sufficient power generating capability, enabling a self start-up of the cell from low temperatures, and consequently enabling it to start up quickly.

In addition to the above benefits, the present invention contributes to a cost reduction of the fuel cell because it is eliminated the necessary to install a freezing prevention device separately.

Preferred embodiments according to the present invention will be described below with reference to the accompanying drawings. The following embodiment should not be construed to limit the present invention. The scaling factors of the drawings may vary from those of the actual components because of intentional exaggerations for the sake of explanations.

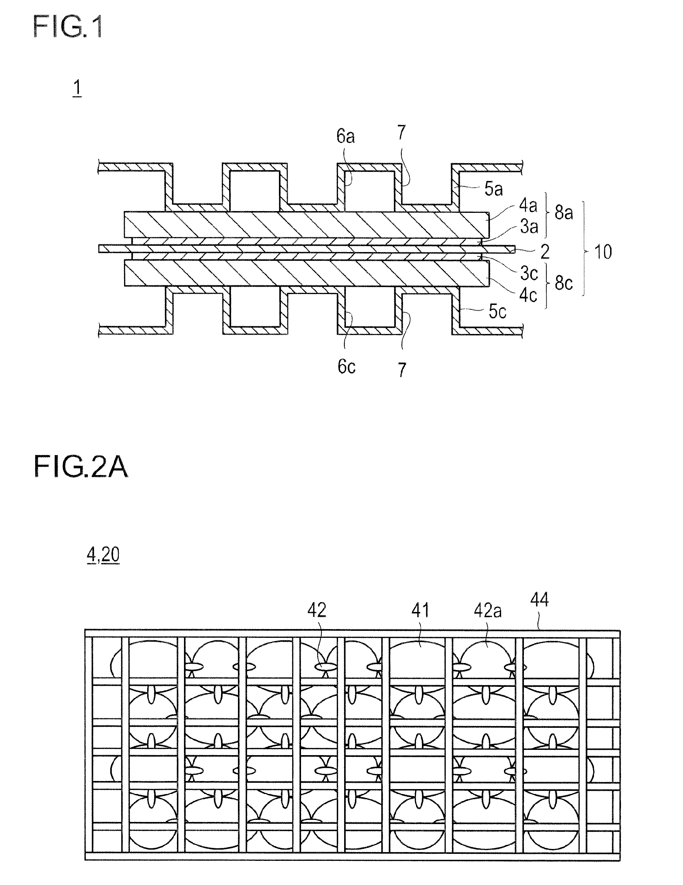

Fig. 1 is a schematic view showing the basic configuration of a polymer electrolyte fuel cell ("PEFC") according to an embodiment of the present invention. The PEFC 1 has a solid polymer electrolyte member 2, and a pair of catalyst layers (an anode catalyst layer 3a and a cathode catalyst layer 3c) that sandwich it. The lamination of the solid polymer electrolyte membrane 2 and the catalyst layers (3a and 3c) is further sandwiched by a pair of gas diffusion layers ("GDL") (an anode gas diffusion layer 4a and a cathode gas diffusion layer 4c). The adjacent catalyst layers (3a and 3c) and the gas diffusion layers (4a and 4c) constitute gas diffusion electrodes (an anode gas diffusion electrode 8a and a cathode gas diffusion electrode 8c). The solid polymer electrolyte membrane 2 and the pair of gas diffusion electrodes (8a and 8c) further constitute a membrane electrode assembly ("MEA") 10 in a laminated state.

In the PEFC 1, the MEA 10 is further sandwiched by a pair of separators (an anode separator 5a and a cathode separator 5c). In Fig. 1, the separators (5a and 5c) are shown as being located on both ends of the MEA 10. However, in a fuel cell stack in which a plurality of MEAs is stacked up, the separators are also typically used as the separators for the adjacent PEFC (not shown). In other words, the MEAs form a stack by sequentially laminated via the separators in a fuel cell stack. Moreover, in an actual fuel cell stack, gas sealing parts are provided between the separators (5a and 5c) and the solid polymer electrolyte membrane 2 as well as between the PEFC 1 and other PEFCs that are located adjacent to it, but such arrangements are not shown in Fig. 1.

The separators (5a and 5c) are obtained by, for example, applying a press forming process to thin plates with a thickness of less than 0.5 mm, forming a corrugating shape as shown in Fig. 1 . The convex areas of the separators (5a and 5c) seen from the MEA side are in contact with the MEA 10. This provides a secure electrical connection with the MEA 10. The concave areas of the separators (5a and 5c) seen from the MEA side (the space between the separators and the MEA generated due to a corrugating shape of the separators) serve as the gas passages for the gas to pass through during the operation of the PEFC 1 . More specifically, let the fuel gas (e.g., hydrogen) flow through the gas passage 6a of the anode separator 5a, and let the oxidant gas (e.g., air) flow through the gas passage 6c of the cathode separator 5c.

On the other hand, the concave areas of the separators (5a and 5c) seen from the opposite side of the MEA side serve as the refrigerant passage 7 for allowing the refrigerant (e.g. , water) for cooling the PEFC to pass through during the operation of the PEFC 1. Moreover, a manifold (not shown) is typically provided in the separator. The manifold serves as the connecting means for connecting each cell when the stack is formed. With such a configuration, the fuel cell stack's mechanical strength is secured.

In the embodiment shown in Fig. 1, the separators (5a and 5c) are formed in a corrugating shape. However, it should not be construed that the separator always take such a corrugating shape, but rather it can have any arbitrary shape including a flat shape or a partially corrugating shape so long as it can provide a function of the gas passage or the refrigerant passage.

The gas diffusion layers (4a and 4c) of the present embodiment are described below in detail.

The gas diffusion layers (the anode gas diffusion layer 4a and the cathode gas diffusion layer 4c) have the function of promoting the diffusion of the gas (the fuel gas or the oxidant gas) supplied via the gas passages (6a and 6c) of the separator to the catalyst layers (3a and 3c), as well as the function of the electronic conductance pass.

Such a gas diffusion layer in the present invention is characterized in having a pore volume of the micropores of 2. 0 x 10-⁴ cm³/cm² or higher. Such a pore volume of micropores may be achieved by any method. A desired pore volume of micropores is preferably achieved by formulating a water-absorbent material having micropores (with pore diameters less than 2 nm). In other words, the gas diffusion layer preferably contains a water-absorbent material having micropores. In the present invention, a "micropore" means a fine pore with a pore diameter of 2 nm or less and a "pore volume of micropores" means the total volume of the micropores with diameters of 2 nm or less existing in a gas diffusion layer. If a gas diffusion layer consists of a plurality of layers, the "pore volume of micropores" means the total of the pore volumes of micropores existing in all the layers that constitute the gas diffusion layer. For example, if the gas diffusion layer consists of a microporous layer and a substrate layer as described later, the "pore volume of micropores" is the total volume of pores of the pore volume of micropores in the microporous layer and the pore volume of micropores in the substrate layer. The evaluation of micropore is conducted by calculating the pore volume of micropores from the adsorption isotherm based on the MP method using the nitrogen adsorption method. Therefore, the lower limit of the pore diameter of the micropore is the lower limit measurable by the nitrogen adsorption method, i.e., 0.42 nm or larger. Moreover, since the micropores in the water-absorbent material can be clogged up during the manufacturing process of the gas diffusion layer, the pore volume of micropores contained in the manufacture gas layer needs to be measured by the aforementioned method. As a more specific evaluation condition of the pore volume of micropores, the measurement is carried out by using BELSORP-mini (available from BEL Japan, Inc.) at liquid nitrogen temperature (adsorption temperature: -196°C or 77 K; relative pressure range: 0.99 or lower; adsorbate: nitrogen) using a sample specimen of the gas diffusion layer with a size of 5 mm x 5 mm (multiple pieces) and a total mass of 0.2 g which has been pretreated at 300°C under vacuum. The total volume of pores of the gas diffusion layer is also calculated from the result of the measurement of the pore distribution using the nitrogen adsorption method and the specific evaluation condition is the same as the condition based on the MP method shown above.

By arranging the pore volume of micropores of the gas diffusion layer at 2. 0 x 10⁻⁴ cm³/cm² or more, it is possible to adsorb the water generated in the cathode catalyst layer during the power generation into micropores, so that it is possible to effectively eliminate excess water dwelling in the vicinity of the cathode catalyst layer. The water residing in the micropores can be prevented from freezing even in an environment of temperatures below the freezing point, especially at -20°C. When the pore volume of micropores of the gas diffusion layer is withing such a range, the duration period of power generation increases and the fuel cell can be started up quickly even in a low temperature environment. Since the amount of water generated by the power generation process increases in proportion to the current density, it is preferable to have the pore volume of micropores as large as possible in order to treat the excess water. From such a point of view, it is preferable that the pore volume of micropores is higher than 2.6 x 10⁻⁴ cm³/cm², or more preferably higher than 3.6 x 10⁻⁴ cm³/cm², or even more preferably higher than 5.1 x 10⁻⁴ cm³/cm². By selecting the range of the pore volume of micropores as such, it becomes possible to expand the duration period of power generation even when a high current density is used in a below-freezing-point-start-up. This makes it possible to achieve a higher output in a lower temperature environment. The volume of water generated as a result of power generation increases in proportion to the current density. Consequently, it can be said that the higher the pore volume of micropores in the gas diffusion layer is, the better, wehereas, although the upper limit is not limited, the pore volume of micropores in the gas diffusion layer is preferably less than 5.0 x 10⁻³ cm³/cm², or more preferably 4.0 10⁻³ cm³/cm².

As mentioned above, since the pore volume of micropores is the key for an improvement of the below-freezing-point-start-up capability, the pore volume of the gas diffusion layer containing mesopores and macropores is not limited in particular so long as the pore volume of micropores is within the abovementioned range.

As mentioned in the above, it is preferable that the pore volume of micropores of the gas diffusion layer more than 2.0 x 10⁻⁴ cm ³/cm² is achieved by providing a water-absorbent material having micropores (with pore diameters less than 2 nm) in the gas dispersin layer. Although there is no limitation as to the water absoring material that is usable here so long as it has a water-absorbing capability and realizes the desired pore volume of micropores, and activated carbon, zeolite, silica gel, alumina, etc. can be use. Among all of these alternatives, activated carbon is the most preferable one in that it is easily obtainable, it has a high micropore ratio, and it is capable of shortening the purge time when the vehicle is at rest as it provides an excellent steam expulsion capability. In case of the present invention, so long as the desired pore volume of micropores is achievable, the material and/or activating method of activated carbon are not limited. For example, activated carbon can be obtained by carburizing plant-based raw materials, such as wood, saw dust, coconut shell, and pulp solution, or mineral-based raw materials such as coal, petroleum, coke, pitch and phenolic resin, and further activated by steam or chemicals.

Although the shape of the water-absorbent material is not limited, it is preferable that it is granular or fibrous. If the water-absorbent material is granular, the shapes of the particles are not limited to any specific shapes but rather they can be powdery, spherical, rod-like, needle-like, plate-like, columnar, irregular, scaly, spindle-like, etc. Also, the particle diameter of the water-absorbent material is not limited, but it is preferable to be 0.1-10 µm, or more preferably 0.2-7 µm, or het more preferably 0.3-5 µm. If the size of the particles is held with such ranges, a better dispersion of gas and water inside the gap (vacant holes) between the particles results, and better contacts with the catalyst layer result as well. The "particle diameter" is herein defined to mean the maximum distance between any two points arbitrarily selected on the profile line of a particle. Moreover, the value of "average particle diameter" is assumed as a value calculated as the average of the particle diameters of particles appearing in several to several tens of fields as the particles are observed using a scanning electron microscope (SEM) or a transmission-type electron microscope (TEM)

Also, if the water-absorbent material is fibrous, the fiber diameter (size) is not specifically defined. It can be selected arbitrarily in consideration of the dispersion characteristic of the gas and water in the gap (vacant hole) that develops between the carbon fibers and their mechanical strength.

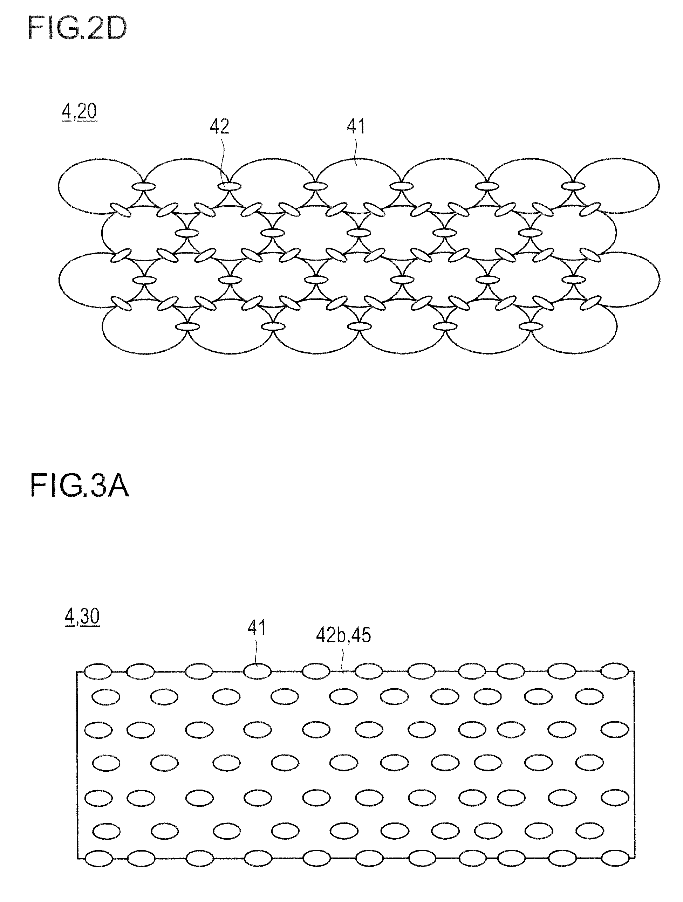

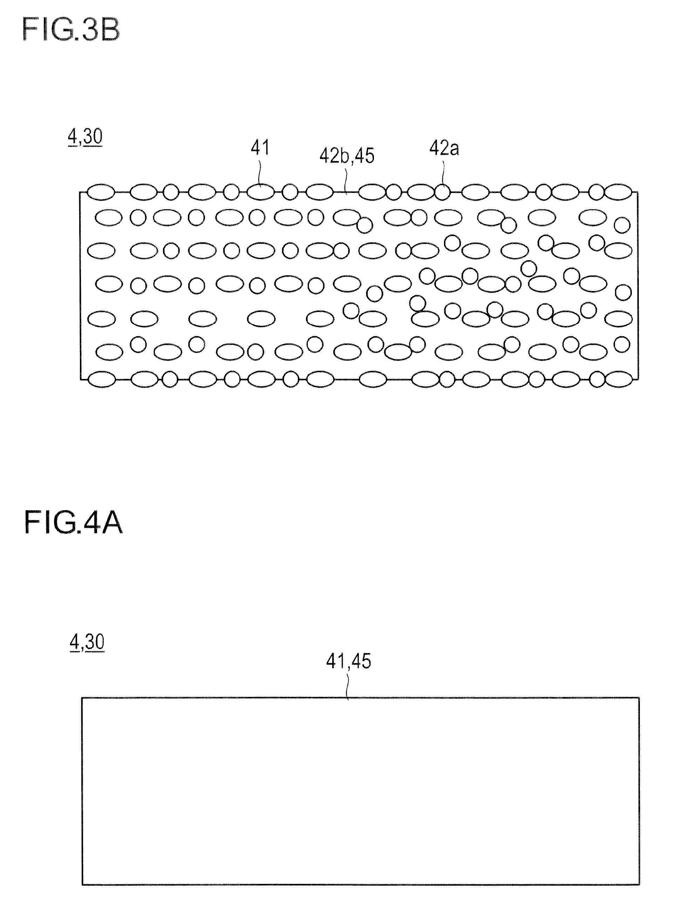

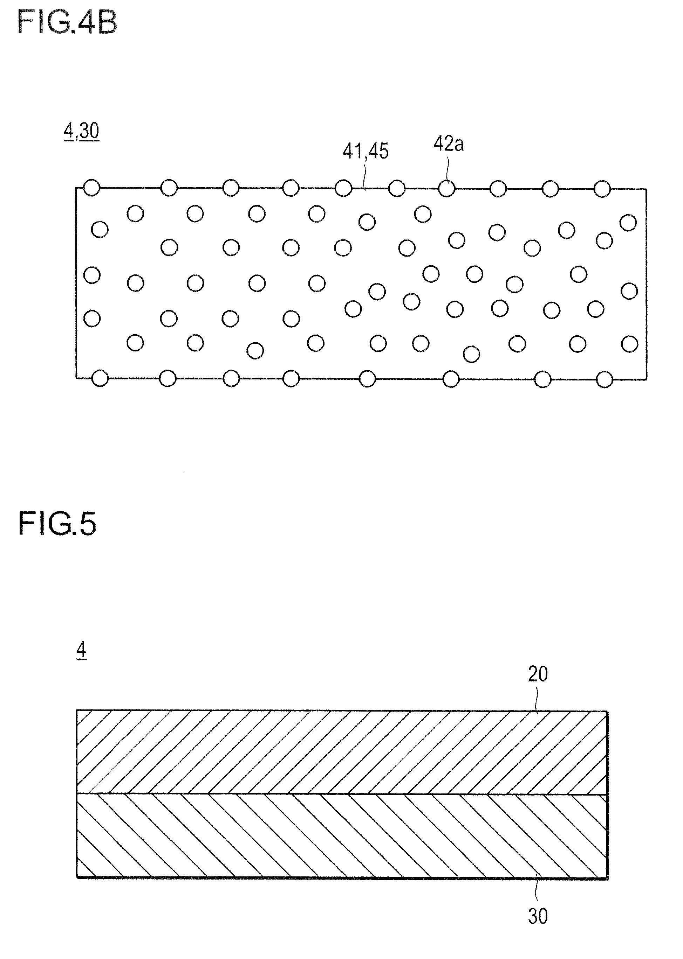

Fig. 2A-Fig. 2D as well as Fig. 3A and Fig. 3B are pattern drawings to show the gas diffusion layers using a granular water-absorbent material according to various embodiments of the present invention. Fig. 4A and Fig. 4B are pattern diagrams showing gas diffusion layers using fibrous water-absorbent materials according to an embodiment of the present invention. The configuration of the gas diffusion layers containing various kinds of water-absorbent materials are described below with reference to these drawings.

In some embodiments, the gas diffusion layers further contain conductive supports, where the water-absorbent material is supported on the conductive support. By having the conductive supports, the contact resistance with the adjacent members can be reduced significantly, thus improving the conductivity of the electrode. Although the shapes of conductive supports are not specified, it is preferable that they are granular or fibrous. More specifically, in case the gas diffusion layer contains a water-absorbent material and a granular conductive support that carry said water-absorbent material, it is preferable that the gas diffusion layer contains a microporous layer consisting of said water-absorbent material supported on the granular conductive support. Yet in a more preferable configuration, the gas diffusion layer in the aforementioned model consists of said microporous layer laminated on top of a substrate layer containing a gas diffusion substrate. Also, in case the gas diffusion layer contains a water-absorbent material and a fibrous conductive support that supports said water-absorbent material, it is preferable that the gas diffusion layer contains a substrate layer consisting of said water-absorbent material being supported on gas diffusion substrate consisting of fibrous conductive support. Yet in a more preferable configuration, the gas diffusion layer in the aforementioned model consists of a microporous layer containing granular conductive supports laminated on top of said substrate layer.

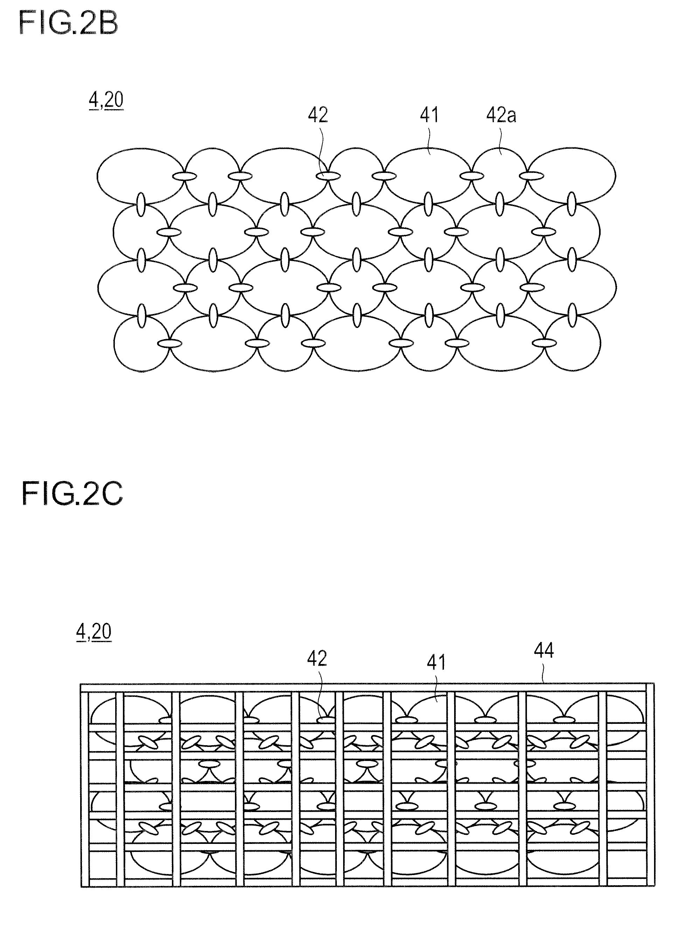

Fig. 2A is a pattern diagram showing a gas diffusion layer according to an embodiment of the present invention containing a granular water-absorbent material and a granular conductive support. In the embodiment shown in Fig. 2A, the gas diffusion layer 4 has water-absorbent material 41, binder 42, granular electrode support (hereinafter also referred to as "conductive support particles") 42a, and microporous membrane 44. These granular water-absorbent material 41, binder 42, conductive support particles 42a, and microporous membrane 44 constitute the microporous layer ("MPL") 20. In other words, the gas diffusion layer according to the present embodiment has a microporous layer 20 containing the water-absorbent material 41 and the binder 42. More specifically, the water-absorbent material 41 is supported on the conductive support particle 42a. The water-absorbent material 41 and the conductive support particle 42a are bound by the binder 42 and are supported on a sheet-like microporous material frame formed of the microporous membrane 44. With such a sheet-like microporous layer, the layer thickness fluctuation can be improved compared to a conventional microporous layer produced by either a wet or dry coating process as shown in Fig. 2B or Fig. 2D, thus allowing it to be mass-produced. Furthermore, since the sheet type microporous layer has a better flexibility, the attack on the membrane (thrusting) by the fibers contained in the gas diffusion substrate can be alleviated in the configuration to be described later wherein the gas diffusion layer contains the microporous layer and the substrate layer. Although the members that constitute the microporous layer are described below using the microporous layer of the present embodiment as an example, the present invention should not be construed to be limited by the configuration described below.

The substance and shape of the water-absorbent material contained in the microporous layer are as described above. The amount of the water-absorbent material contained in the microporous layer should be arbitrarily adjusted in order to make the pore volume of micropores of the gas diffusion layer to be within the desired range and to secure a sufficient mechanical strength. The pore volume of micropores and strength depend on the type (substance) of water-absorbent material and the loading amount, so that a microporous layer of a desired pore volume and mechanical strength can be obtained by adjusting the type, the loading amount, and the content of the water-absorbent material. Therefore, if the pore volume of micropores of the microporous layer having a thickness of 30 µm formed by using a water-absorbent material in the ratio of 10 % by mass for the total mass of the microporous layer is 8.0 x 10⁻⁵ cm³/cm², a microporous layer with a pore volume of micropores higher than 2.0 x 10⁻⁴ cm³/cm² can be formed by making the thickness of the microporous layer of the same composition thicker than 75 µm. More specifically, the content of the water-absorbent material is preferably 10-80 % by mass for the total mass of the microporous layer. If the content of the water-absorbent material is more than 10 % by mass, the desired pore volume of micropores can be realized as the gas diffusion layer (GDL) without increasing the thickness of the microporous layer (MPL). This makes it possible to reduced the increase of the resistance in the thickness direction and to mitigate the deterioration of the performance at normal temperatures. On the other hand, if the content of the water-absorbent material is less than mass 80%, the microporous layer (MPL) can be more easily formed and its handling will be easier. If the content of the water-absorbent material is within the aforementioned range, the desired pore volume of micropores can be more easily secured and the below-freezing-point-start-up capability of the cell can be improved.

Although no specific limitation is applied to the granular conductive support so long as it provides conductivity, it should preferably be chemically stable at positive and negative potentials and should preferably be made of a carbon or metallic material. Amongst them, carbon particles are used as a preferable granular conductive support. As the carbon to constitute such carbon particles, any publicly known materials such as carbon black, graphite, and expanded graphite can be arbitrarily used. Amongst them, carbon blacks such as oil furnace black, channel black, lamp black, thermal black, acetylene black are favored due to their superior conductivities and large specific surface areas. Such carbon particles that are available from the market include oil furnace black such as Vulcan XC-72, Vulcan P, Black Pearls 880, Black Pearls 1100, Black Pearls 1300, Black Pearls 2000, and Legal 400 offered by Cabot Corporation, Ketchen Black EC offered by Lion Corporation, #3150 and #3250 offered by Mitsubishi Chemical Corporation; acetylene black such as Denka Black offered by Denki Kagaku Kogyo, K.K., and others. In addition to carbon black, natural graphite, pitch, coke, and artificial graphite or carbon obtainable from organic compounds such as polyacrylonitrile, phenolic resin, and furan resin, etc., can be used for the same purpose. It is also acceptable to apply processing treatment such as graphite treatment to said carbon particles in order to improve corrosion resistance.

The particle diameter of said conductive support particles should preferably be 0.2-5 µm or more preferably 0.3-1 µm. If the particle diameter of the conductive support particles is less than 5 µm, the surface becomes smoother, thus contributing to the mitigation of contact resistance. If it is larger than 0.2 µm, it can prevent the reduction of gas diffusiveness due to the reduction of the porosity of the microporous layer. The shapes of the conductive support particles are not limited to any specific shapes but rather they can be spherical, rod-like, needle-like, plate-like, columnar, irregular, scaly, spindle-like, etc. The "particle diameter of the conductive support particles" herein means an average secondary particle diameter of the conductive support particles. The measurement of average secondary particle diameter of the conductive support particles is to be executed by calculating the average of the particle diameters of particles appearing in several to several tens of fields as the particles are observed using a scanning electron microscope (SEM) or a transmission-type electron microscope (TEM).

Although the arrangement of the conductive support particles in the microporous layer is not limited specifically, but it is preferable that the water and gas dispersion passages (gaps) be formed to penetrate through the microporous layer in the thickness direction. This provides a secure means of the expulsion of water from the gas diffusion substrate. The water and gas dispersion passages (gaps) in the microporous layer is not limited to a specific shape so long as they are formed to penetrate through the microporous layer, and any pattern such as linear, mesh-like are acceptable. The size of porosities (average porosity diameter) formed between the conductive support particles inside the microporous layer should preferably be less than 10 µm, or more preferably 0.1-10 µm. Defining the average porosity of the microporous layer to be less than 10 µm makes it to be between the average prorosity of the catalyst layer and the average porosity of the gas diffusion substrate so that it becomes easier to discharge the water and more secure in providing the gas diffusion passage.

The content of the conductive support particles in the microporous layer can be arbitrarily adjusted in order to achieve the preferred porosity structure and mechanical strength of the microporous layer. More specifically, if the microporous layer contains any water-absorbent material, the content of the conductive support particles should be preferably 0-60 % by mass, or more preferably 5-55 % by mass of the total mass of the microporous layer.

The microporous layer should preferably contain water-repellent agent with the aim of enhancing water repelling capability to prevent flooding phenomenon etc. The water-repellent agents that can be used here include, but not limited to, fluorine polymer materials such as polytetrafluoroethylene (PTFE), polyfluorovinylidene (PVdF), polyhexafluoropropylene, and tetrafluoroethylene-hexafluoropropylene copolymer (FEP), as well as thermoplastic resins such as polyethylene and polypropylene.

In case that the microporous layer contains conductive support particles and water-repellent agent, the mixing ratio between the conductive support particles and water-repellent agent in the microporous layer should be approximately 95:5 to 40:60 at ratio of mass (conductive support particles : water-repellent agent) considering the balance between the water-repellent characteristic and the conductivity.

The water-absorbent material and/or the conductive support particles can be bound by a binder in the microporous layer. The binder that can be used here include fluorine polymer materials such as polytetrafluoroethylene (PTFE), polyfluorovinylidene (PVDF), polyhexafluoropropylene, and tetrafluoroethylene-hexafluoropropylene copolymer (FEF), thermosetting resins such as phenolic resin, melamine resin, and polyamide resin, and thermoplastic resins such as polypropylene and polyethylene. The water-repellent agents and the binders mentioned above partially overlap each other. As such, it is preferable to use a binder which has water-repellent characteristic as well. Amongst them, fluorine polymers are favored here because they have excellent water-repellent characteristic and corrosion preventiveness in electrode reactions, and polytetrafluoroethylene (PTFE) is particularly suitable in consideration of its preventive effect against the clogging of the micropores of the absorbing material during the fabrication of the microporous layer. The use of the binder having the water-repellent characteristic, water-repellent characteristic is added to the fine pores (between the water-absorbent material and the conductive support particles) inside the microporous layer and improves the water discharging capability. These binders can be used singularly or in combination of two or more kinds. Moreover, other kinds of polymers can be used as well.

The content of the binder in the microporous layer can be arbitrarily adjusted in order to achieve the preferred porosity structure of the microporous layer. In more specifics, the content of the binder should preferably be 5-60 % by mass, more preferably 10-50 % by mass, or even more preferably 12-40 % by mass of the total mass of the microporous layer. A good combination can be achieved among the particles if the content of the binder is more than 5 % by mass, while the increase of electrical resistance of the microporous layer can be prevented if it is less than 60 % by mass.

Any microporous membrane can be used so long as it has a sheet-like microporous structure. Specifically, expanded plolytetrafluoroethylene (ePTFE) is suitable for use. The structure of ePTFE is that of a network structure (microporous structure) of PTFE fibers, which is fibrillated by means of biaxial expanding of PTFE. High strength, flexibility, chemical stability and thermal stability are the inherent characteristics of ePTFE, and its porosity's structure, strength and thickness can be adjusted within the desired range. If polytetrafuloroethylene (PTFE) is to be used as a binder, a better interaction occurs between the PTFE fibers and fluoro-chains contained in PTFE. By means of using such ePTFE, a microporous layer with an excellent mechanical strength and flexibility can be achieved. The method of manufacturing such an ePTFE is disclosed in US Patent 3,953,566, US Patent 6,613,203 or US Patent 5,814,405, so that ePTFE manufactured according to the method in those documents may be used.

Although the content of the microporous membrane in the microporous layer is not limited specifically, it should be preferably 0.1-50 % by mass, or more preferably 1-40 % by mass of the total volume of the microporous layer. If it is held within such a range, a sheet-like microporous layer with an excellent flexibility and mechanical strength may be obtained.

Although the thickness of the microporous layer can be arbitrarily determined considering the characteristics of the obtained gas diffusion layer, it should be preferably 3-500, more preferably 5-300 µm, or yet more preferably 10-150 µm, or most preferably 20-100 µm. If it is held within such a range, an appropriate balance between the mechanical strength and the permeability for gas and water can be achieved.

In the embodiment shown in Fig. 2A, although the microporous layer contains water-absorbent material, conductive support particles, binder, and microporous membrane, and the microporous layer, the microporous layer without containing microporous membrane can be also preferably used. Fig. 2B is a pattern diagram showing a gas diffusion layer according to another embodiment of the present invention containing a granular water-absorbent material and a granular conductive support. In the embodiment shown in Fig. 2B, the gas diffusion layer 4 contains conductive support particles 42a in addition to water-absorbent material 41, and the water-absorbent material 41 is supported on the conductive support particles 42a. The water-absorbent material 41 and the conductive support particles 42a are bound by the binder 42 to form a microporous layer 20 containing the water-absorbent material 41, the binder 42, and the conductive support particles 42a. In such a configuration, not only the elctroconductivity of the microporous layer improves, but also the gas and water dispersion characteristics improve as the granular water-absorbent material and the granular conductive support form fine cavity structure which serves as the dispersion passage for the reaction gas and water.

The microporous layer can be configured with the granular water-absorbent material and binder only, or if necessary, also with a miropouraous membrane, but without containing the conductive support particles. Fig. 2C is a pattern diagram showing a gas diffusion layer according to yet another embodiment of the present invention containing a granular water-absorbent material and a granular conductive support. In the embodiment shown in Fig. 2C, the gas diffusion layer 4 has a sheet-like microporous layer 20. In the present embodiment, the water-absorbent material 41 and the binder 42 are held in the microporous membrane 44 having a microscopic continuous porous structure (framework). The water-absorbent material 41, the binder 42, and the microporous membrane 44 form a microporous layer 20. In such a case, the layer thickness fluctuation can be improved compared to a conventional microporous layer produced by either a wet or dry coating process as shown in Fig. 2D, thus allowing it to be mass-produced.

Fig. 2D is a pattern diagram showing a gas diffusion layer according to yet another embodiment of the present invention containing a granular water-absorbent material. In an embodiment shown in Fig. 2D, the gas diffusion layer 4 has the granular water-absorbent material 41 bound by the binder 42. In the present embodiment, the granular water-absorbent material 41 and the binder 42 aggregate to form the microporous layer 20. In other words, the gas diffusion layer according to the present embodiment has a microporous layer 20 containing the water-absorbent material 41 and the binder 42. In such a case, it is possible to increase the pore volume of micropores within the gas diffusion layer so that it is capable of not only sufficiently absorbing the water generated by the power generating process, but also prevents the freezing of the water under a low temperature environment.

In the embodiment shown in Fig. 2B-Fig. 2D, the description of the members that constitute the microporous layer is omitted to avoid duplication. Although the gas diffusion layer contains the binder in the embodiment shown in Fig. 2A-Fig. 2D, the present invention is not limited to a configuration in which the binder is contained, but rather it can have a different configuration wherein the binding is not contained so long as the mechanical strength of the gas diffusion layer is secured.

Moreover, the aforementioned microporous layer can be used as a gas diffusion layer as is, or can be used to form a gas diffusion layer by being laminated on a substrate layer containing a gas diffusion substrate. The gas diffusion substrate is not limited to a specific configuration, but can assume various other configurations such as fabrics, paper-like paper-making material, felt, unwoven fabric, etc. The more preferable type of configuration is to use a gas diffusion substrate formed from carbon fibers such as carbon paper, carbon cloth, and carbon unwoven fabrics.

Said gas diffusion substrate can be chosen from products available on the market, e.g. , Cabon Paper TGP Series available from Toray Industries, Inc. or Cabon Cloth available from E-TEK. Moreover, the gas diffusion substrate should preferably contain water-repellent agent with the aim of enhancing water repelling capability to prevent flooding phenomenon, etc. The water-repellent agent is not limited to any specific product, and the water-repellent agent used for the microporous layer can be used for this purpose as well. The amount of the water-repellent agent to be added to the substrate layer is not limited to any specific amount, and can be adjusted arbitrarily so long as it is capable of sufficiently covering the surface of the gas diffusion substrate (conductive support fibers). More specifically, the mixing ratio between the gas diffusion substrate (conductive support fibers) and the water-repellent agent should preferably be about 99:1 to 50:50, more preferably 95:5 to 60:40 in the mass ratio (conductive support fibers: water-repellent material) considering the balance between the water-repellent characteristic and the conductivity.

Depending on the water discharge characteristics of the membrane electrode assembly and the surface properties of the separator, a gas diffusion substrate with no water-repellent treatment or a gas diffusion substrate with a hydrophilic treatment is used preferably.

In the present configuration, the substrate layer can consist of only the aforementioned gas diffusion substrate or a porous metal can be used both as the gas diffusion substrate and the substrate layer. The porous metal can be any of those known as the material of the substrate layer, for example, iron, titanium, aluminum, copper, or alloys of them; stainless steel; precious metals such as gold and silver, etc. Moreover, there is no limitation concerning the pore diameter of porous metals.

The thickness of the substrate layer can be arbitrarily determined considering the characteristics of the gas diffusion layer, but it should be approximately 30-500 µm. If it is held within such a range, an appropriate balance between the mechanical strength and the permeability of gas and water can be achieved.

In other embodiments, the gas diffusion layer further contains fibrous conductive supports, and water-absorbent materials are supported on fibrous conductive supports (hereinafter also referred to as "conductive support fibers"). Fig. 3A is a pattern diagram showing a gas diffusion layer according to an embodiment of the present invention containing a granular water-absorbent material and a fibrous conductive support. In the embodiment shown in Fig. 3A, gas diffusion layer 4 further contains conductive support fibers 42b, and water-absorbent material 41 is supported on the conductive support fibers 42b. The conductive support fibers 42b forms a gas diffusion substrate 45, and the gas diffusion substrate 45 and the water-absorbent material 41 form a substrate layer 30. In other words, the present embodiment has the substrate layer 30 in which the water-absorbent material 41 is supported on the gas diffusion substrate 45 consisting of the conductive support fibers 42b. In such a configuration, the mechanical strength of the gas diffusion layer is improved because it consists of the conductive support fibers. Although the members that constitute the substrate layer are described below using the substrate layer of the present embodiment as an example, the present invention should not be construed to be limited by the configuration described below.

The substance and shape of the water-absorbent material contained in the substrate layer are as described above. In case that the water-absorbent material is contained in the substrate layer where the water-absorbent material is fibrous, the content of the water-absorbent material should preferably be 10-100 % by mass of the total mass of the substrate layer. If the content of the water-absorbent material is within the aforementioned range, the desired pore volume of micropores can be more easily secured, and the below-freezing-point-start-up capability of the cell can be improved. In case that the fibrous water-absorbent material is used, the content of the water-absorbent material should preferably be 10-50 % by mass of the total mass of the substrate layer. If it is maintained within such a range, a preferable mechanical strength of the substrate and a preferable pore volume of the micropores will be secured for the substrate layer.

The fibrous conductive support forms the gas diffusion substrate and this gas diffusion substrate constitutes the substrate layer. For such a fibrous conductive support, it is preferable, but not limited to, to use a material selected from a group consisting of carbon fibers, metal fibers and organic fibers. The carbon fibers that are applicable here include: polyacrylonitrile (PAN) group carbon fibers, pitch group carbon fibers, phenolic group carbon fibers, and vapor-grown carbon fibers. Since carbon fibers have excellent specific strength and specific coefficient of elasticity, gas diffusion substrate having excellent elasticity and strengths can be obtained based on their usage. The application of PAN group carbon fibers or pitch group carbon fibers that are widely used for industrial applications is more preferable. PAN group carbon fiber means here the type of fiber made of synthetic fiber consisting mainly of PAN, while pitch group carbon fiber means the type of fiber made from petroleum, coal, synthetic pitch, etc. Although it is not limited to it specifically, the fiber diameter of carbon fibers should preferably be 5-20 µm. Metal fibers applicable here include: fibers made of iron, titanium, aluminum, and copper, as well as their alloys; stainless steel; and precious metals such as gold and silver. Metal fibers have better conductivity in general. From the viewpoint of mechanical strength, wider usefulness, cost, ease of process, and high conductivity, fibers made of stainless steel, aluminum and aluminum alloy are most suitable amongst all. Although it is not limited to it specifically, the diameter of metal fibers should preferably be 1-100 µm, more preferably 5-50 µm, or even more preferably 5-20 µm. Organic fiber here means resin fibers with conductivity, e.g., phenolic group resin fibers, polyacrylonitrile fibers, polyethylenephthalate fiber, polybutyleneterephthalate, etc. From the viewpoint of being able to have conductivity more securely, it is preferable that its porous material layer contains phenolic group resin fibers. Although it is not limited to it specifically, the diameter of phenolic fibers should preferably be 5-50 µm, or more preferably 10-30 µm.

The configuration of the gas diffusion substrate formed by conductive support fiber is not limited specifically, it can be configured from fabric, paper-like paper-making material, felt, unwoven fabric, etc. The more preferable type of configuration is to use a gas diffusion substrate formed from carbon fibers such as carbon paper, carbon cloth, and carbon unwoven fabrics. Said gas diffusion substrate can be chosen from products available on the market, e.g. , Cabon Paper TGP Series available from Toray Industries, Inc. or Cabon Cloth available from E-TEK.

The gas diffusion substrate should preferably contain water-repellent agent with the aim of enhancing water repelling capability to prevent flooding phenomenon, etc. The water-repellent agent is not limited to any specific product, and the water-repellent agent used for the microporous layer can be used for this purpose as well.

The amount of the water-repellent agent to be added to the substrate layer is not limited to any specific amount, and can be adjusted arbitrarily so long as it is capable of sufficiently covering the surface of the gas diffusion substrate (conductive support fibers). More specifically, the mixing ratio between the gas diffusion substrate (conductive support fibers) and the water-repellent agent should preferably be about 99:1 to 50:50, more preferably 95:5 to 60:40 in the mass ratio (conductive support fibers: water-repellent material) considering the balance between the water-repellent characteristic and the conductivity.

Depending on the water discharge characteristics of the membrane electrode assembly and the surface properties of the separator, a gas diffusion substrate with no water-repellent treatment or a gas diffusion substrate with a hydrophilic treatment is used preferably.

Also, porous metal can be uses as the substrate layer. The porous metal can be any of those known as the material of the substrate layer, for example, iron, titanium, aluminum, copper, or alloys of them; stainless steel; precious metals such as gold and silver, etc. Moreover, there is no limitation concerning the pore diameter of porous metals.

The thickness of the substrate layer can be arbitrarily determined considering the characteristics of the gas diffusion layer, but it should be approximately 30-500 µm. If it is held within such a range, an appropriate balance between the mechanical strength and the permeability of gas and water can be achieved.

In yet another embodiment, the water-absorbent material is supported on both the conductive support particles and the conductive support fibers. Fig. 3B is a pattern diagram showing a gas diffusion layer according to an embodiment of the present invention containing a granular water-absorbent material, a fibrous conductive support, and a granular conductive support. In the embodiment shown in Fig. 3B, the gas diffusion layer 4 consists of the water-absorbent material 41 supported on both the conductive support particles 42a and the conductive support fibers 42b, wherein the conductive support fibers 42b form the gas diffusion substrate 45. The water-absorbent material 41, the conductive support particles 42a, and the gas diffusion substrate 45 form the substrate layer 30. With such a configuration a gas diffusion layer with better mechanical strength and microporosity (water and gas dispersiveness) is obtained.

Fig. 4A is a pattern diagram showing a gas diffusion layer according to an embodiment of the present invention using a fibrous water-absorbent material. In an embodiment shown in Fig. 4A, a gas diffusion layer 4 is composed of a fibrous water-absorbent material 41. The fibrous water-absorbent material 41 forms a gas diffusion substrate 45 and this gas diffusion substrate 45 constitutes a substrate layer 30. With such a configuration, it is possible to increase the content of the water-absorbent material in the gas diffusion layer up to 100 % by mass, so that the pore volume of micropores in the gas diffusion layer can be increased. As a consequence, it is possible to absorb the water generated by the power generating process can be sufficiently absorbed and also prevent its freezing in a low temperature environment. Moreover, a gas diffusion layer with an excellent mechanical strength can be obtained as well.

Fig. 4B is a pattern diagram showing a gas diffusion layer according to yet another embodiment of the present invention containing a fibrous water-absorbent material and a granular conductive support. In the embodiment 4B, a gas diffusion layer 4 contains a fibrous water-absorbent material 41 and a granular conductive support 42a. The conductive support particles 42b exist in a scattered state in a gas diffusion substrate 45 formed of the fibrous water-absorbent material 41, and the conductive support particles 42b and the gas diffusion substrate 45 constitute a substrate layer 30. With such a configuration, a gas diffusion layer with better mechanical strength and microporosity (water and gas dispersiveness) is obtained.

In the aforementioned embodiments shown in Fig. 4 and Fig. 4B, the gas diffusion substrate 45 consist solely of the water-absorbent material 41, the gas diffusion substrate 45 can be consisted of the fibrous water-absorbent materials 41 as well as other fibrous materials. For example, the gas diffusion substrate 45 can be configured from the fibrous water-absorbent material 41 and the conductive support fibers 42b. Also, in the embodiments shown in Fig. 3B and Fig. 4B, the configuration that was described in relation to Fig. 3A can also be preferably applied to the member that constitutes the substrate layer.

In the embodiments shown in Fig. 2A-Fig. 2D, Fig. 3A and Fig. 3B, as well as Fig. 4A and Fig. 4B, the gas diffusion layer 4 consists of either one of the microporous layer 20 (Fig. 2A-Fig. 2D), or the substrate layer 30 (Fig. 3A and Fig. 3B, as well as Fig. 4A and Fig. 4B). However, the present invention is not limited to a gas diffusion layer of such a single layer structure, but may have a plurality of layers as well. Fig. 5 is a pattern diagram showing a gas diffusion layer according to an embodiment of the present invention containing a substrate layer and a microporous material. In the embodiment shown in Fig. 5, the gas diffusion layer 4 has a microporous layer 20 laminated on top of a substrate layer 30. In the gas diffusion layer with such a laminated configuration, it is acceptable so long as either the microporous layer or the substrate layer contains a water-absorbent material having micropores. If the water-absorbent material is to be contained in the microporous layer, the microporous layer, for example, can be the aforementioned microporous layer 20 shown in Fig. 2A-Fig. 2D. Moreover, the substrate layer is configured to contain a gas diffusion substrate consisting of conductive support fibers, and may or may not contain the water-absorbent material. Also, porous metal can be used as the substrate layer. On the other hand, if a substrate layer contains a water-absorbent material, the substrate layer, for example, can be the aforementioned substrate layer 30 shown in Fig. 3A-Fig. 3C, as well as Fig. 4A and Fig. 4B. Also, the microporous layer may be composed of a combination of the conductive support particles and the water-absorbent material, i.e., the microporous layer may or may not contain the water-absorbent material. By having such a laminated configuration, a gas diffusion layer with an excellent balance of below-freezing-point-start-up capability, mechanical strength, and gas/water diffusion capability. If the laminated configuration of the microporous layer and the substrate layer is to be used, the microporous layer should preferably place on the catalyst layer's side. By doing so, the gas and water dispersiveness can be further improved. The gas diffusion layer of the present invention may contain other layers in addition to the microporous layer and/or the substrate layer.

Although a preferred embodiment of the method of manufacturing the gas diffusion layer according to the present invention is described below, the method of manufacturing the gas diffusion layer needs not to be limited to it, but rather other publicly known methods can be applied as well. The present invention shall not be construed to be limited by the following embodiment.

When the gas diffusion layer contains a substrate layer, a gas diffusion substrate must be prepared first. The water-repellent treatment of the gas diffusion substrate can be done using a commonly known water-repellent treatment. For example, there is a method of immersing the substrate to be used for the gas diffusion layer in an aqueous dispersion solution or an alcohol dispersion solution and dry it thermally in an oven, etc. From the standpoint of the simplicity of the exhaust gas treatment during the drying process, the use of aqueous dispersion solution of the water-repellent agent is preferable. The same water-repellent treatment as above can be applied to a case when the gas diffusion substrate formed from a fibrous water-absorbent material is to be used.

As can be seen from Fig. 3A, Fig. 3B and Fig. 4B, if it is intended to have a configuration where the water-absorbent material 41 and/or the conductive support particles 42a exist in a dispersed manner in the gas diffusion substrate 45, the water-absorbent material 41 and/or the conductive support particles 42a are dispersed into the solvent to prepare a slurry solution. As the solvent, water or alcoholic group solvents such as perfluorobenzene, dichloropentafluoropropane, methanol, and ethanol can be used preferably. Next, either coat the gas diffusion substrate 45 with the slurry solution, or immerse the gas diffusion substrate 45 into the slurry solution in order to impregnate the gas diffusion substrate 45 with the water-absorbent material 41 and/or the conductive support particles 42a. Next, drying it to obtain the substrate layer containing the gas diffusion substrate 45 impregnated with the water-absorbent material 41 and/or the conductive support particles 42a.

When the gas diffusion layer contains a microporous layer, the water-absorbent material 41 and/or the conductive support particles 42a, as well as the binder 42, if necessary, and the water-repellent agent are dispersed into the solvent to prepare a slurry solution. As the solvent, water or alcoholic group solvents such as perfluorobenzene, dichloropentafluoropropane, methanol, and ethanol can be used preferably. By drying the resultant slurry solution, the microporous layer is obtained. Also, if the gas diffusion layer contains the microporous membrane 44, impregnate the microporous membrane 44 with the slurry solution by immersing the microporous membrane into the slurry solution obtained in the above.

It is also possible to produce the microporous layer by producing a film from a uniform mixture (mix, slurry, etc.) of the water-absorbent material and the binder (PTFE, etc.), as well as the conductive support particles and other fluorine resins, as needed, into a film.

The details of the method of mixing or producing a film are not limited specifically, and can be implemented by a person skilled in the art by adding modifications as desired, but the manufacturing method, for example, using PTFE as the binder, can be shown as follows. The mixture (mix, slurry, etc,) can be prepared by a publicly known method. For example, the mixture can be prepared by a dry method or a wet method, while the slurry can be prepared by a wet method.

The dry method is to mix a water-absorbent material, and, if needed, a fine powder of the conductive support particles (conductive carbon powder, etc.) and a fine powder of PTFE. In case of the dry method, said fine powder is charged into an appropriate mixer (e.g. , V blender), agitate it without applying shearing effect on PTFE (for example, mixing at a low mixing speed maintaining a temperature below 20°C), and further add an appropriate process aid (for example, mineral spirits) to cause it to be absorbed into said mixture thoroughly to prepare the mixture. The fine powder of the water-absorbent material and the conductive support particles (e. g. , conductive carbon powder) can be obtained by pulverizing the water-absorbent material and the conductive support particles (e.g. , conductive carbon powder) using a publicly known pulverizer (e.g., ball mill, pin mill, homogenizer, etc.). It is convenient to use fine powders of PTFE available on the market. It is recommendable to heat appropriately (e.g., 40-60°C, preferably 50°C or so) the mixture after adding a process aid.

On the other hand, the wet method is a method of mixing the water-absorbent material, the conductive support particles and PTFE in water. In other words, in the wet method, the slurry (ink) is prepared by mixing in water the raw materials (water-absorbent material, conductive support particles, and PTFE) that are pulverized to a degree of being able to disperse under the existence of a surface-activating agent. Moreover, if a mechanical shearing effect is applied to the slurry (ink) or a precipitant (alcohol, etc.) is added during the mixing process, it may cause the water-absorbent material, the conductive support, and PTFE to coprecipitate. Filtering the coprecipitated substance, drying it, and causing the dried substance to absorb the process aid in a manner similar to that of the aforementioned dry method, one can also prepare the desired mixture. Although the microscopic water-absorbent material and the conductive support particles can be prepared in a manner similar to that of the aforementioned dry method, it is simpler to add to the liquid with the surface-activating agent and cause them to be dispersed into the liquid by pulverizing them by a submerged pulverizing means (e. g. , homogenizer). Also, for the PTFE to be used here, it is convenient to use waterborne PTFE dispersion available on the market.

In order to produce a film from the mixture, the method of extruding the PTFE paste is simpler to be applied. In other words, it is possible to use various publicly know methods, e.g. , the method of producing pellets of the mixture by preforming it, extruding the pellets through a die, and drying the extruded product (extrusion method), and the method of extruding the aforementioned pellets into a bead-like product using a extrusion machine, roll the bead-like product between the two rolls, and dry the product (bead rolling method), etc.

The amount of the water-absorbent material to be applied (coated) should be an amount that can secure the pore volume of micropores of the gas diffusion layer to fit into the desired range and provide a sufficient mechanical strength, in case that the mixture (mix, slurry, etc.) obtained by uniformly mixing the water-absorbent material and the binder (PTFE, etc.), as well as the conductive support particles and other fluorine resin as needed is formed into a film to produce the microporous layer. As mentioned above, the pore volume of micropores and strength depend on the type (substance) of water-absorbent material and the loading amount, so that a microporous layer of a desired pore volume and mechanical strength can be obtained by adjusting the type, the loading amount, and the amount of additive to the water-absorbent material. More specifically, the amount of the water-absorbent material to be applied (coated) is preferably the amount that causes the theoretical pore volume of micropores due to the water-absorbent material to be 2.0 x 10⁻² to 5.0 x 10⁻¹ cm³/cm², or more specifically 2.6 x 10⁻² to 4.0 x 10⁻¹ cm³/cm². With such an amount, the gas diffusion layer provides the pore volume of micropores of a desired range and a sufficient mechanical strength even when a portion of the micropores of the water-absorbent material is clogged when preparing the microporous layer. The "theoretical pore volume of micropores due to the water-absorbent material" can be obtained as the product of the amount of the water-absorbent material applied per 1 cm² of the gas diffusion layer (g/cm²) and the pore volume of micropores of the water-absorbent material (cm³/g).

The thickness and the moisture permeability of the film are adjustable by appropriately adjusting said film producing process. For example, if the primary formed film produced in the extrusion forming method or the bead rolling method is too thick, the rolling can be repeated until the film comes out to be a specified thickness. Depending on the preparation condition, the moisture permeability may drop due to an excessive rise of the density, but the moisture permeability may rise by means of expanding of the film. As such, the thickness and the moisture permeability of the film can be adjusted by means of properly combining rolling and expanding. On the other hand, in the coating method, coating and drying can be repeated until the film thickness reaches the specified value, and the rolling and expanding processes can be used to further adjust the thickness and moisture permeability of the film. It is also possible to adjust the electric resistance of the film in the thickness direction as well as the air permeability by means of rolling and expanding.

In the drying process of the extrusion forming method or the bead rolling method, heating up to temperatures (e.g., 150-300°C, or more specifically 200°C or so) is recommended so that the process aid (mineral spirits, etc.) can be removed by evaporation, while in the drying process of the coating method, heating up to temperatures (e.g., 100-300°C, or more specifically 120°C or so) is recommended so that the water content can be removed by evaporation.

In the drying process, it is also recommended to carbonize organic impurities (e.g., surface-activating agent used in the wet method) to make them harmless. While the moisture permeability of the film may get extremely affected if the surface-activating agent remains, the moisture permeability can be lowered to an acceptable level by carbonizing the surface-activating agent. The carbonizing temperature is, e.g., 300-400°C or so (more specifically 350°C or so). The method of removing the organic impurities is not limited to the aforementioned carbonizing process, but rather various other methods can be used depending on the types of the impurities. For example, depending on the type of the surface-activating agent, it can be removed by heating it to 250°C or higher, while the surface-activating agent can be removed by extraction using solvents (e.g., alcohol). The details of such methods are disclosed in Publication of Japanese Patent Application S57-030270 and Publication of Japanese Patent Application 2006-252948.

If the microporous layer is to be formed on top of the substrate layer, it can be accomplished by coating the gas diffusion substrate with a slurry solution or a microporous membrane impregnated with slurry solution, and by drying it. Thus, the gas diffusion layer laminated with the substrate layer 30 and the microporous layer 20 is obtained.

The gas diffusion layer of the aforementioned embodiment can be used in various applications. One of such examples is the gas diffusion layers (4a, 4c) shown in Fig. 1. Also, according to one embodiment of the present invention, gas diffusion electrodes for the fuel cell (8a, 8c) containing gas diffusion layers (4a, 4c) and catalyst layers (3a, 3c) laminated on top of said gas diffusion layers are provided. A gas diffusion electrode means an assembly of a gas diffusion layer and an electrode catalyst layer. As the gas diffusion layer is formed by laminating and assembling the catalyst layer on the microporous layer side of the gas diffusion layer, a closer contact between the gas diffusion layer and the catalyst layer is achieved. This prevents the formation of ice on the interface between the gas diffusion layer and the catalyst layer, and suppresses the increase of electrical resistance.

Yet another embodiment of the present invention provides a membrane electrode assembly for fuel cell containing a polymer electrolyte membrane 2, and a pair of anode gas diffusion electrode 8a and a cathode gas diffusion electrode 8c that sandwich it. In the membrane electrode assembly, at least one of said anode gas diffusion electrode 8a and said cathode gas diffusion electrode 8c is the gas diffusion electrode of the aforementioned embodiment. The anode gas diffusion electrode is preferably the gas diffusion electrode of the aforementioned embodiment. It is preferable that the anode gas diffusion electrode, i.e., the gas diffusion layer of the anode, has more than 2.0 x 10⁻⁴ cm³/cm² micropores. Water is generated on the cathode side during the power generation process. It is possible to promote the reverse dispersion of the water generated at the cathode by providing the water-absorbent material having micropores in the anode gas diffusion layer. Also, in case of a polymer electrolyte type fuel cell, for example, the hydrogen gas at the anode has higher gas diffusiveness than the oxygen gas at the cathode, so that the anode is less affected by the adsorbed water or ice than the cathode. Consequently, the excessive water dwelling on the cathode side moves more speedily toward the anode side, prolonging the duration period of power generation in a low temperature environment. Thus, a self start-up from a lower temperature becomes possible, which allows the cell to start up more quickly. Furthermore, both the anode gas diffusion electrode and the cathode gas diffusion electrode can be used as the gas diffusion layer in which the gas diffusion layer of the aforementioned embodiment is applied. In such a case, the water-absorbing capacity increases, so that the duration period of power generation can be increased compared to a case where only the gas diffusion electrode is used. Furthermore, it goes without saying that only the cathode gas diffusion electrode can be used as the gas diffusion layer in which the gas diffusion layer of the aforementioned embodiment is applied. Although the duration period of power generation can be increased even in such a case, the adsorbed water and ice can dwell and tends to prevent the diffusion of the reaction gas (oxygen), so that the effect is smaller compared to a case of the application on the anode side. It is most preferable to apply the gas diffusion layer having more than 2.0 x 10⁻⁴ cm³/cm² micropores only to the anode gas diffusion electrode. According to such a configuration, since not so many micropores exist on the cathode gas diffusion electrode compared to the anode gas diffusion electrode, the water generated on the cathode side does not dwell at the cathode side and move quickly to the micropores of the anode gas diffusion layer. Consequently, it is possible to suppress/prevent the freezing of water inside the cathode catalyst layer so that oxygen gas can quickly spread throughout the catalyst layer during the startup time. On the other hand, the hydrogen gas in the anode catalyst layer does not get much disturbance by water and ice even when water is frozen in the micropores of the anode gas diffusion layer, and can easily spread throughout the anode catalyst layer during the startup time. Therefore, with such a configuration, the fuel cell provides a better startup performance (below-freezing-point-start-up capability) in a low temperature environment. The present invention shall not be construed to be limited by the above mechanism. Moreover, an embodiment of the present invention provides a fuel cell having the gas diffusion layer of the aforementioned embodiment, or the gas diffusion electrode using the same, or the membrane electrode assembly that use them, and a pair of anode separator and a cathode separator that sandwich said membrane electrode assembly.

In the following, the constituents of the PEFC that uses the gas diffusion layer according to the aforementioned embodiment will be described with reference to Fig. 1. However, the features of the present invention are based on the gas diffusion layer. Therefore, the specific configurations of its members other than the gas diffusion layer may be arbitrarily modified based on the knowledge of prior art.

### [Electrolyte layer]

The electrolyte layer, for example, consists of a solid polymer electrolyte membrane 2 such as can be seen in the configuration shown in Fig. 1. The solid polymer electrolyte membrane 2 has a function of selectively allowing the protons generated in an anode catalyst layer 3a to be transmitted to a cathode catalyst layer 3c during the operation of a PEFC 1 . The solid polymer electrolyte membrane 2 also serves as a bulkhead to prevent the fuel gas supplied to the anode side from mixing with the oxidant gas supplied to the cathode side.

The solid polymer electrolyte membranes 2 are classified into fluorine group polymer electrolyte membranes and hydrogen carbonate group polymer electrolyte membranes depending on the types of ion exchange resins that they are made of. The ion exchange resins that constitute fluorine group polymer electrolyte membranes include: perfluorocarbon sulfonic acid group polymers, perfluorocarbon phoshonic acid group polymers, tri-fluorostyrene sulfonic acid group polymers, ethylenetetrafluroroethylene-g-styrene sulfonic acid group polymers, ethylene-tetrafluoroethylene copolymers, polyvinylidenefluoride-perfluorocarbon sulfonic acid group polymers, such as Nafion (registered trademark of Dupont), Aciplex (registered trademark of Asahi Kasei Chemicals Corp.), and Flemion (registered trademark of Asahi Glass Co.). These fluorine polymer electrolyte membranes are used preferably and, in particular, fluorine group polymer electrolyte membranes consisting of perfluorocarbon sulfonic acid group polymers are more preferably used, from the standpoint of improving the power generating performance such as heat resistance and chemical stability.

The hydrocarbon electrolytes applicable herein include: sulfonatedpolyethersulfon (S-PES), sulfonated polyaryletherketone, sulfonated polybenzimidazolealkyl, phosphorylated polybenzimidazolealkyl, sulfonated polystyrene, sulfonated polyether etherketone (S-PEEK), sulfonated polyphenylene (S-PPP). These hydrocarbon polymer electrolyte membranes are used preferably from the manufacturing standpoints that their raw materials are inexpensive, their manufacturing processes are simple, and their materials are highly selectable. The aforementioned ion exchange resins can be used singularly or in combinations of two or more. Their uses are not exclusive and other materials can be used as well.

The thickness of the electrolyte layer may be arbitrarily chosen considering the characteristics of the obtained fuel cell and not limited to any specific value. The thickness of the electrolyte layer is normally 5-300 µm or so. The balance between the strength of the membrane during the manufacturing process, the durability, and output performance during usage can be controlled properly, if the thickness of the electrolyte layer is held within such a range.

### [Catalyst layer]

The catalyst layers (anode catalyst layers 3a and cathode catalyst layers 3c) are the layers where the actual battery reactions occur. More specifically, the oxidation reaction of hydrogen occurs in the anode catalyst layer 3a, while the reduction reaction of oxygen occurs in the cathode catalyst layer 3c.

The catalyst layer contains catalyst components, conductive catalyst supports for supporting the catalyst components, and electrolytes. The complex consisting of catalyst components being supported on catalyst supports is hereinafter called "electrode catalyst" as well.

Any publicly known catalyst can be used for the anode catalyst layer so long as it provides a catalytic action to the oxidation reaction of hydrogen and there is no special restriction. Any publicly known catalyst can be used for the cathode catalyst layer as well so long as it provides a catalytic action to the reduction reaction of oxygen and there is no special restriction. More specifically, the catalysts are selected from metals such as platinum, ruthenium, iridium, rhodium, palladium, osmium, tungsten, lead, iron, chromium, cobalt, nickel, manganese, vanadium, molybdenum, gallium, and aluminum, as well as their alloys.

Of these, those that contain platinum at least partially are preferred in order to improve catalytic activity, anti-toxicity against carbon monoxide and others, and heat resistance. Said alloy compositions should preferably contain 30-90 atom % of platinum, although it depends to the type of metal to be alloyed, and the content of the metal to be alloyed with platinum should be 10-70 atom %. Alloy is a collective name of a combination of a metal element combined with one or more kinds of other metals or non-metallic elements, such combination having metallic characteristics. An alloy can be an eutectic alloy which is a mixture of crystals of different component elements, or a solid solution which is formed by completely molten component elements, or a compound where the component elements are all metals or partially metallic and partially non-metallic in the present application. In this case, the catalyst components used for the anode catalyst layer and the catalyst components used for the cathode catalyst layer are both selected arbitrarily from the above. Unless noted differently herein, the descriptions for catalyst components for the anode catalyst layer and for the cathode catalyst layer define the same thing. Therefore, it is called collectively as "catalyst components." However, it does not mean that the catalyst components for the anode catalyst layer and for the cathode catalyst layer need not be the same, and should be selected arbitrarily in order to provide the desired functions described above.

The shape and size of the catalyst component are not limited specifically and any shape and size can be used as in the case of publicly known catalyst components. However, the shape of a catalyst component is preferably granular. In this case, the average particle diameter of the catalyst particles is preferably 1-30 nm. The balance between the catalyst usage rate related to the effective electrode area where electrochemical reaction is occurring and the ease of support is properly controllable, if the average particle diameter of the catalytic particles is within such a rang. The "average particle diameter of the catalyst particles" according to the present invention is determined as an average value of the crystallite diameter obtained by the X-ray diffraction from the half-band width of the diffraction peak of the catalyst component, and the particle diameter of the catalyst component obtained from the image of the transmission-type electron microscope.

The catalyst support functions as a support member for supporting the aforementioned catalyst component and as an electronic conduction path related to the passing of electrons between the catalyst component and other members.

As a catalyst support, it is preferable that it has a specific surface area for supporting the catalyst component under a desired distributed condition and sufficient electron conductivity, so that a support mainly consisting of carbon is preferable. More specifically, carbon particles made of carbon black (oil furnace black, channel black, lamp black, thermal black, acetylene black, etc.), activated carbon, coke, natural graphite, and synthetic graphite applicable for the purpose. "Mainly consisting of carbon" is a concept meaning that carbon atoms are contained as the main component, including both concepts of "consisting only of carbon atoms" and "consisting primarily carbon atoms." In some cases, it may contain elements other than carbon atoms in order to improve the characteristics of fuel cells. Incidentally, "consisting primarily carbon atoms" means that it is tolerated to have less than 2-3 % by mass of impurities to be included.

The BET specific surface area of the catalyst support can be a specific surface area sufficient to support the catalyst component in a highly distributed state, but should be within the range of 20-1600 m²/g, or more specifically of 80-1200 m²/g. The balance between the distributive characteristic of the catalyst component on the catalyst support and the effective usage rate of the catalyst component can be properly controlled, if the specific surface of the catalyst support is held within such a range.

Although the size of the catalyst support is not limited specifically, it is preferably that the average particle diameter is 5-200 nm or so, or more preferably 10-100 nm, from the viewpoint of the ease of support, the usage rate of the catalyst, and controlling the thickness of the catalyst layer within an appropriate range.

In case of an electrode catalyst whose catalyst component is supported on the catalyst support, the amount of the supported catalyst component should preferably be 10-80 % by mass, or more preferably 30-70 % by mass of the total volume of the electrode catalyst. The balance between the distributive characteristic of the catalyst component on the catalyst support and the performance of the catalyst component can be properly controlled, if the amount of the supported catalyst component is held within such a range. The amount of the supported catalyst component of the electrode catalyst is measured by the induction coupled plasma emission spectrography (ICP).

The catalyst layer includes, in addition to the electrode catalyst, the ion-conductive polymer electrolyte. The particular polymer electrolyte is not limited specifically, and can be arbitrarily referred to any publicly available prior art. For example, the ion exchange resin that constitutes the aforementioned electrolyte layer can be added as the polymer electrolyte to the catalyst layer.

The catalyst layer may contain additives such as water-repellent agent, dispersant, thickener, and pores forming material as needed. These additives are publicly known and the person skilled in the art may be able to use as needed, while other specific configurations are not limited specifically.

The method of preparing the membrane electrode assembly is not limited specifically, and any publicly known method may be applied. For example, it is possible to use the method of transferring by means of a hot press or coating the catalyst layer on the electrolyte membrane, drying it, and assembling it to the gas diffusion layer, or the method of preparing two gas diffusion electrodes (GDE) by coating the catalyst layer on the microporous layer side of the substrate layer (or on one side of the substrate layer if the microporous layer is not included) and drying it, and assemble the gas diffusion electrodes on both sides of the electrolyte membrane by means of a hot press. The condition of coating and assembly conditions of the hot press and others may be arbitrarily adjusted depending on the types of the electrolyte membrane and the electrolyte (perfluorasulfonic acid group and hydrocarbon group) in the catalyst layer.

### (Separator)

The separator has a function of electrically connecting cells in series when configuring the fuel cell stack by connecting a plurality of single-cells of the fuel cell in series in fabricating a polymer electrolyte fuel cell, etc. The separator also has a function of serving as a bulkhead for separating the fuel gas, oxidant gas and refrigerant from each other. In order to secure these passages, it is preferably to provide a gas passage and a refrigerating passage on each of the separator. As the material for constructing the separator, any publicly known materials such as carbon of dense carbon graphite, carbon plate and others, or a metallic material such as stainless steel, can be arbitrarily applied without any limitation. The thickness and size of the separators, and the shape and size of each passage are not specified particularly, and may be determined arbitrarily considering the desired output performance of the fuel cell.

Although the polymer electrolyte membrane fuel cell (PEFC) is used as an example of the type fuel cell in the foregoing description, the present invention can be applied to other kinds of fuel cells, such as alkaline fuel cell, direct methanol fuel cell, micro fuel cell. Among them, the polymer electrolyte membrane fuel cell is most favorable as it can be built compact and dense, providing a high power output. Although said fuel cell is suitable not only as a mobile unit such as a motor vehicle where the installation space is limit, but also as a stationary unit, it is particularly suitable for use for automobile use where system startup and stop as well as output fluctuations occur frequently.

The method of manufacturing an applicable fuel cell is not limited and various publicly known methods in the field of the fuel cell can be referred to.

The fuel to be used for operating the fuel cell is not limited particularly related to this invention. For example, hydrogen, methanol, ethanol, 1-propanol, 2-propanol, 1-butanol, secondary butanol, tertiary butanol, dimethyl ether, diethyl ether, ethylene glycol, diethylene glycol, etc. can be used. Of these, hydrogen and methanol are more favorably used as they provide high output power.

Moreover, in order that the fuel cell can generate a desired voltage, a fuel cell stack can be formed by connecting in series a plurality of layers of membrane electrode assemblies via the separators. The shape of the fuel cells is not limited specifically, but rather can be determined arbitrarily in such a manner as to be able to achieve desired battery characteristics such as voltage.

The aforementioned PEFC 1 and the fuel cell stacks use the gas diffusion layer having an excellent below-freezing-point-start-up capability or the gas diffusion electrode comprising the gas diffusion layer. Therefore, the PEFC 1 and the fuel cell stack have an excellent below-freezing-point-start-up capability.

### [Vehicle]

A PEFC 1 and the fuel cell stack using thereof according to the present embodiment can be installed, for example, on an electric vehicle as its drive power source.

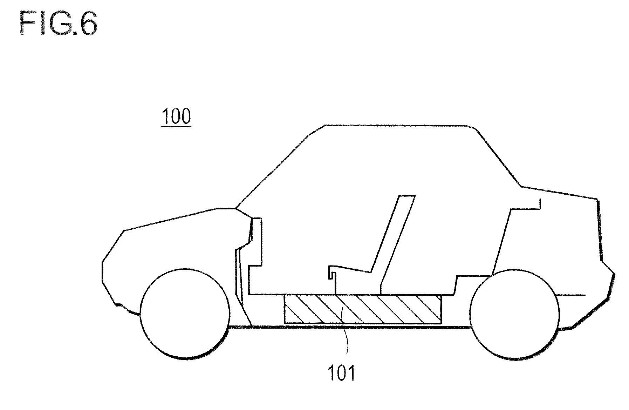

Fig. 6 is a conceptual drawing of a vehicle equipped with a fuel cell stack according to an embodiment of the present invention. In order to install a fuel cell stack 101 to a fuel cell driven vehicle 100, for example, it can be installed beneath the seat located in the middle of the body of the fuel cell driven vehicle 100 as shown in Fig. 3. By installing the fuel cell beneath the seat, it makes it possible to provide more spaces of the cabin and the trunk. The fuel cell stack 101 does not have to be installed beneath the seat, but rather can be installed in the bottom of the rear trunk or in the engine compartment of the front section of the vehicle depending on the circumstance. As can be seen here, the electric vehicle in which the PEFC 1 and the fuel cell stack 101 are installed is also included in the technical scope of the present invention. The PEFC 1 and the fuel cell stack have an excellent below-freezing-point-start-up capability. Therefore, the present invention provides an electric vehicle with an excellent below-freezing-point-start-up capability.

### [Example]

Although the effect of the present invention will be described below using various examples and comparison examples, the technical scope of the present invention should not be construed to be confined to the particular examples.

### [Example 1]

### (1) Preparation of the gas diffusion layer of the anode.

### (a) Water-repellent process for the gas diffusion substrate

As the gas diffusion substrate for the anode, a water-repellent process was applied to the gas diffusion layer using the same carbon paper (thickness: 200 µm) used on the gas diffusion substrate contained in the gas diffusion layer of the cathode to be described later. Aqueous PTFE dispersion solution (D1-E. a product of Daikin Industries, Ltd.) is used for the water-repellent process. The amount of PTFE contained in the carbon paper after the water-repellent process was 10 % by mass.

### (b) Preparation of microporous layer (MPL)

Powder of activated carbon (average particle diameter: 3 µm; raw material: coconut husk; micropore volume: 0.85 cm³/g) as a water-absorbent material, carbon black (average particle diameter: 1 µm (secondary particle diameter)) as a conductive support particle, and the same aqueous PTFE dispersion solution as the one used in the aforementioned water-repellent process (D1-E. a product of Daikin Industries, Ltd.) are mixed with a ratio of powder activated carbon : carbon black: PTFE to be 7:4:2 to produce a slurry. This slurry was applied using a bar coater on the gas diffusion substrate which was preprocessed to be water-repellent, dried naturally, further dried at 80°C for 15 minutes. It was then calcined for 30 minutes at 330°C. By this, a gas diffusion layer having formed on the gas diffusion substrate a microporous layer (thickness: 30 µm, amount per unit area: 17 g/cm²) containing water-absorbent material.

The distribution of pores of the gas diffusion layer obtained above was measured using the nitrogen adsorption method to calculate the volume of pores. Further, the pore volume of micropores for micropores with diameter smaller than 2 nm was calculated by the MP method. The result is shown in Table 1.

### (2) Membrane electrode assembly (MEA) and assembling single-cells

PRIMEA (registered trademark) 5580 (available from Japan GORE-TEX) was prepared as the assembly consisting of the polymer electrolyte membrane being sandwiched by a pair of catalyst layers (in a state where the catalyst layers are coated on the electrolyte membrane). CARBEL (registered trademark) CNW (available from Japan GORE-TEX; thickness: 230 µm) was prepared as the gas diffusion layer (with MPL) of the cathode.

This assembly was sandwiched by the gas diffusion layer of the anode prepared as described before and the gas diffusion layer described above in such a manner as to have the substrate layer on the outside to obtain an electrode membrane assembly in which the electrolyte membrane being sandwiched by the anode gas diffusion electrode and the cathode gas diffusion electrode. By having the above assembly sandwiched by graphite separators and further sandwiched by gold-plated stainless steel collector plate, a single-cell for evaluation (active area: 5 cm x 5 cm) was prepared.

### [Example 2]

A gas diffusion layer for the anode was prepared by the same method as the one employed in Example 1 (1), except that the mass ratio of powder of activated carbon: carbon black: PTFE is chosen to be 5: 6: 2, wherein the gas diffusion thus prepared has a microporous layer (thickness: 30 µm, amount per unit area: 17g/cm²) containing the water-absorbent material on the gas diffusion substrate. The pore volume of the gas diffusion layer and the pore volume of micropores were calculated similarly as in case of Example 1. The result is shown in Table 1.

The single cell for evaluation was prepared the same way in Example 1(2) except that the particular gas diffusion layer was used.

### [Example 3]

A gas diffusion layer for the anode was prepared by the same method as the one employed in Example 1 (1), except that the mass ratio of powder of activated carbon: carbon black: PTFE is chosen to be 4:7:2, wherein the gas diffusion thus prepared has a microporous layer (thickness: 30 µm, amount per unit area: 17 g/cm²) containing the water-absorbent material on the gas diffusion substrate. The pore volume of the gas diffusion layer and the pore volume of micropores were calculated similarly as in case of Example 1. The result is shown in Table 1.

The single cell for evaluation was prepared the same way in Example 1 (2) except that the particular gas diffusion layer was used.

### [Example 4]

Various kinds of powder activated carbon (average particle diameter 5 µm; petroleum raw material; pore volume of micropores: 0.25 cm³/g) were used as water-absorbent materials to be contained in the microporous layer, and the mass ratio of powder activated carbon: carbon black: PTFE in the microporous layer was chosen to be 7:3:4. A gas diffusion layer for the anode was prepared by the same method as the one employed in Example 1 (1), except that a microporous layer (thickness: 25 µm, amount per unit area: 16 g/cm²) containing the water-absorbent material on the gas diffusion substrate was formed. The pore volume of the gas diffusion layer and the pore volume of micropores were calculated similarly as in case of Example 1. The result is shown in Table 1.

The single cell for evaluation was prepared the same way in Example 1 (2) except that the particular gas diffusion layer was used.

### [Example 5]

### (1) Preparation of the gas diffusion layer of the anode.

The mass ratio of powder of activated carbon (average particle diameter: 3 µm; raw material: coconut husk; micropore volume: 0.85 cm³/g): carbon black: PTFE in the microporous layer was chosen to be 8:0:2. A gas diffusion layer for the anode was prepared by the same method as the one employed in Example 1 (1), except that a microporous layer (thickness: 30 µm, amount per unit area: 17 g/cm²) containing the water-absorbent material on the gas diffusion substrate was formed. The pore volume of the gas diffusion layer and the pore volume of micropores were calculated similarly as in case of Example 1. The result is shown in Table 1.

### (2) Membrane electrode assembly (MEA) and assembling single-cells

PRIMEA (registered trademark) 5580 (available from Japan Gore-Tex) was prepared as the assembly consisting of the polymer electrolyte membrane being sandwiched by a pair of catalyst layers (in a state where the catalyst layers are coated on the electrolyte membrane). CARBEL (registered trademark) CNW (available from Japan GORE-TEX; thickness: 230 µm) was prepared as the gas diffusion layer (with MPL) of the cathode.

The single cell for evaluation was prepared the same way in Example 1 (2) except that the particular assembly and the gas diffusion layer prepared as above were used.

### [Comparison Example 1]

The single cell for evaluation was prepared the same way in Example 1 except that the same CARBEL (registered trademark) CNW (available from Japan GORE-TEX; thickness: 230 µm) as the one used for the gas diffusion layer of the anode is used as the gas diffusion layer (with MPL) of the cathode. The pore volume of the gas diffusion layer and the pore volume of micropores were calculated similarly as in case of Example 1. The result is shown in Table 1.

### [Comparison Example 2]

Carbon with a large pore volume but with a smaller pore volume of micropores (Black Pearls 2000 available from Cabot Corporation) was used as the water-absorbent material to be contained in the microporous layer instead, and the mass ratio of powder of activated carbon: carbon black: PTFE was chosen to be 0:8:2. A gas diffusion layer for the anode was prepared by the same method as the one employed in Example 1 (1), except that a microporous layer (thickness: 30 µm, amount per unit area: 17 g/cm²) containing the water-absorbent material on the gas diffusion substrate was formed. The pore volume of the gas diffusion layer and the pore volume of micropores were calculated similarly as in the case of Example 1. The result is shown in Table 1.

The single cell for evaluation was prepared the same way in Example 1 (2) except that the particular gas diffusion layer was used.

### [Comparison Example 3]

The single cell for evaluation was prepared the same way in Example 5 except that the same CARBEL (registered trademark) CNW (available from Japan GORE-TEX; thickness: 230 µm) as the one used for the gas diffusion layer of the anode is used as the gas diffusion layer (with MPL) of the cathode. The pore volume of the gas diffusion layer and the pore volume of micropores were calculated similarly as in the case of Example 1. The result is shown in Table 1.

**[Table 1]**

| | Anode gas diffusion layer | | | | Cathode gas diffusion layer | Assembly |
|---|---|---|---|---|---|---|
| | Configuration | Pore volume of micropores (cm³/cm²) | Pore volume (cm³ /cm²) | Water-absorbent material content in MPL (% by mass) | Configuration | Configuration |
| Example 1 | MPL + carbon paper | 5.1x10⁻⁴ | 9.6x10⁻⁴ | 54 | CARBEL(trademark)CNW | PRIMEA(trademark)5580) |
| Example 2 | MPL+ carbon paper | 3.6x10⁻⁴ | 9.4x10⁻⁴ | 38 | CARBEL(trademark)CNW | PRIMEA(trademark)5580 |
| Example 3 | MPL + carbon paper | 2.6x10⁻⁴ | 6.3x10⁻⁴ | 31 | CAREL(trademark)CNW | PRMEA(trademark) 5580 |
| Example 4 | MPL + carbon paper | 2.0x10⁻⁴ | 4.3x10⁻⁴ | 50 | CARBEL(trademark)CNW | PRMEA(trademark) 5580 |
| Example 5 | MPL + carbon paper | 6.3x10⁻⁴ | 1.1x10⁻³ | 80 | CARBEL(trademark)CNW | PRIMEA(tradmark)5580 |
| Comparison Example 1 | CARBEL | Less than measurement Less than measurement limit | 2.9x10⁻⁴ | - | CARBEL(trademark)CNW | PRIMEA(trademark)5580 |
| Comparison Exampie 2 Comparison Example 2 | MPL + carbon paper | 1.4x10⁻⁴ | 2.6x10⁻³ | 0 | CARBH(trademark)CNW | PRIMFA(trademark)5580 |
| Comparison Example 3 | CARBEL | Less than measurement limit | 2.9xt0⁻⁴ | - | CARBEL(trademark)CNW | PRIMEA(trademark)5580 |

### (Evaluation of below-freezing-point-start-up capability)

Applying hydrogen to the anode and air to the cathode of each one of the single-cells for evaluation prepared in the Examples and Comparison Examples, and generated the power at the condition of gas flow anode/cathode S.R. = 18.6/21.7 and cell temperature of -20°C. S.R. (stoichiometric ratio) here means the ratio of hydrogen or oxygen required for generating the specified electric current, and "anode S.R. = 18.6" means that hydrogen is supplied at the rate of 18.6 times of the hydrogen amount required to generated the specified electric current. The output voltage was measured for the current density of the single-cell at this time.

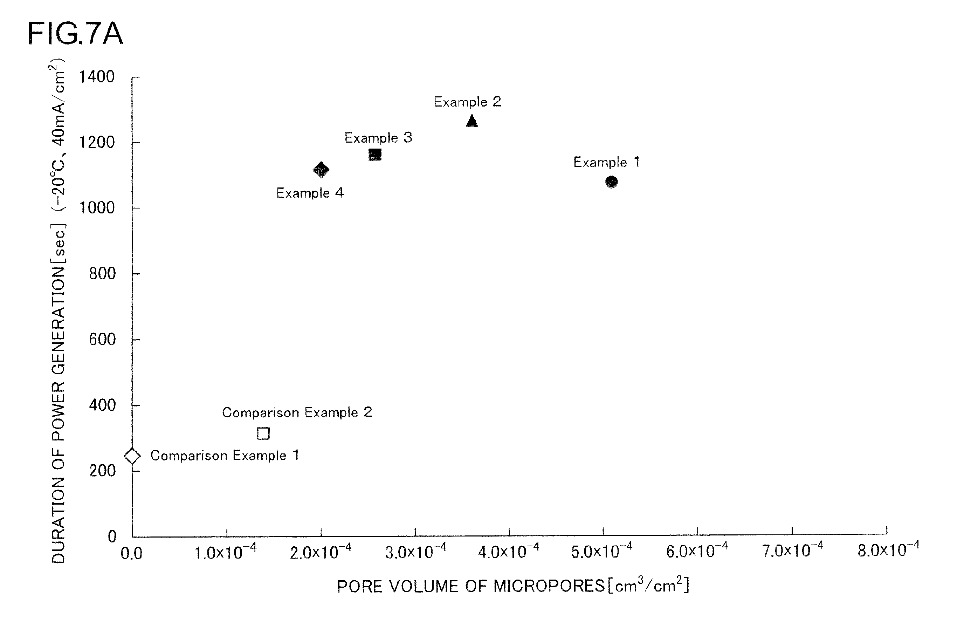

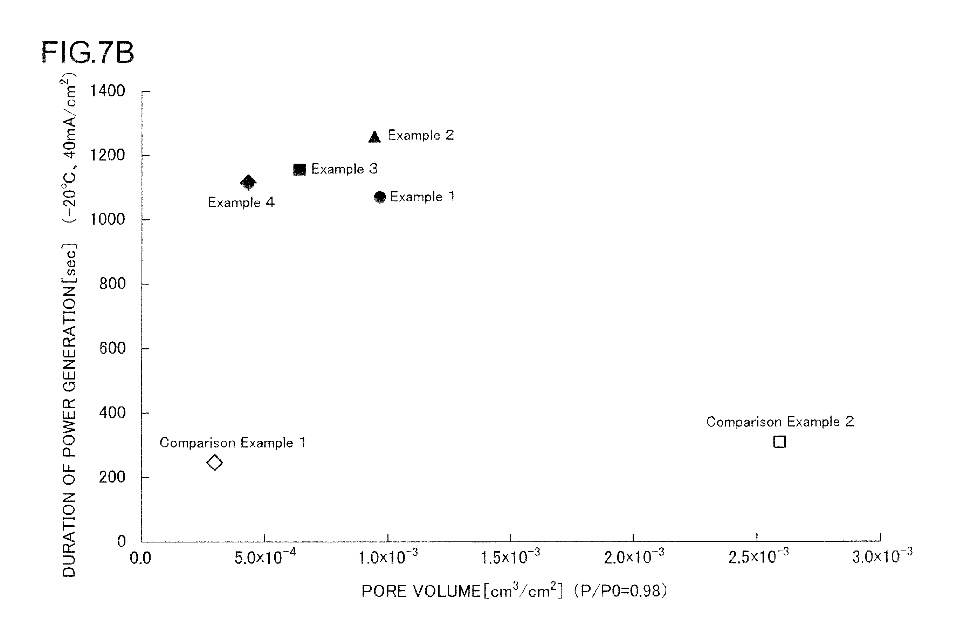

The evaluation results of the single-cells for evaluation prepared in Examples 1-5 and Comparison Examples 1-3 when the current density was set to 40 mA/cm² are shown in Figs. 7-8.

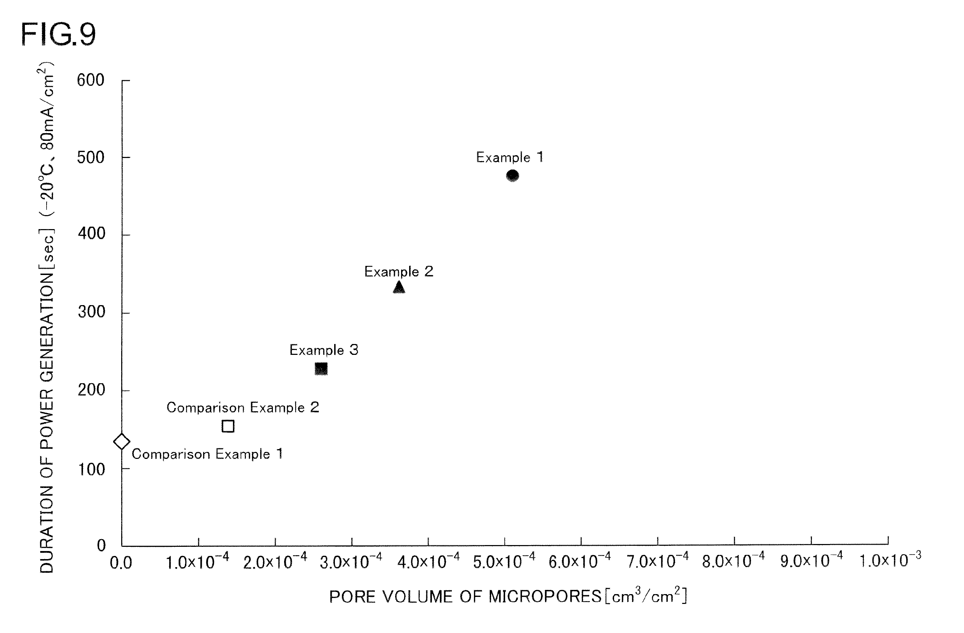

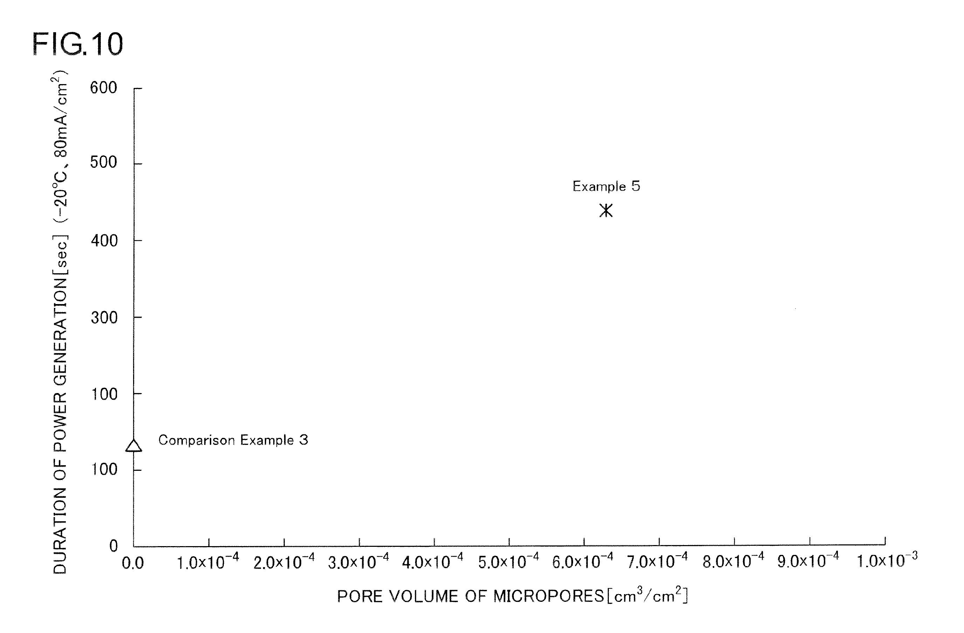

The evaluation results of the single-cells for evaluation prepared in Examples 1-3 and Comparison Examples 1-2 when the current density was set to 80 mA/cm² are shown in Figs. 9-10.

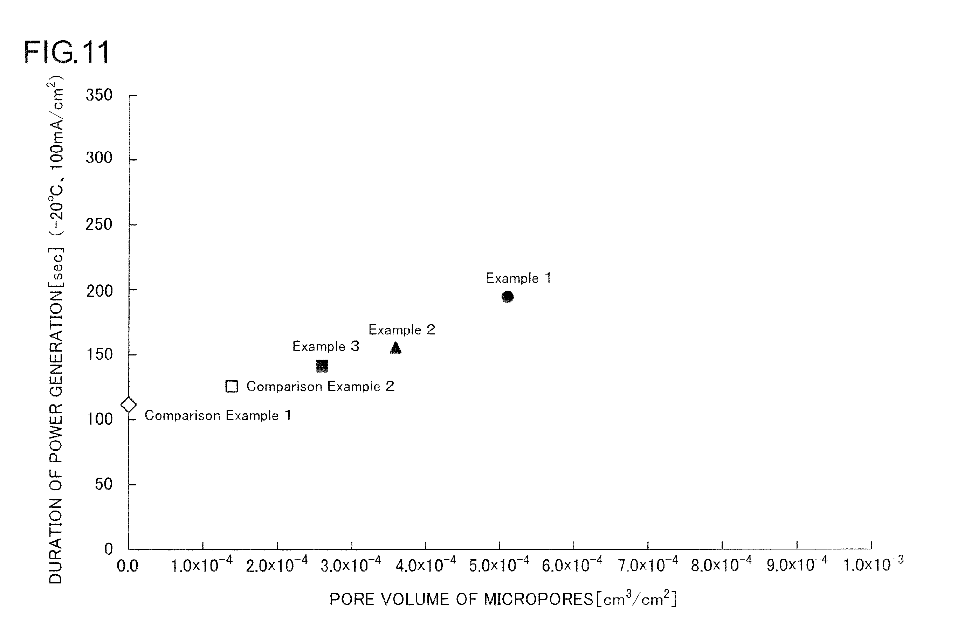

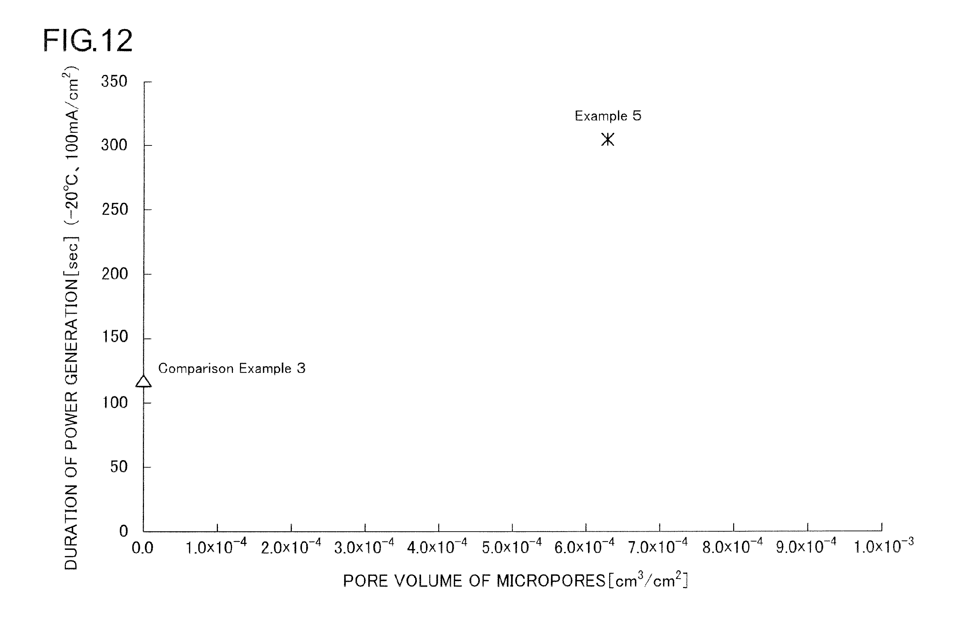

The evaluation results of the single-cells for evaluation prepared in Examples 1-3 and Example 5 as well as Comparison Examples 1-3 when the current density was set to 100 mA/cm² are shown in Figs. 11-12.

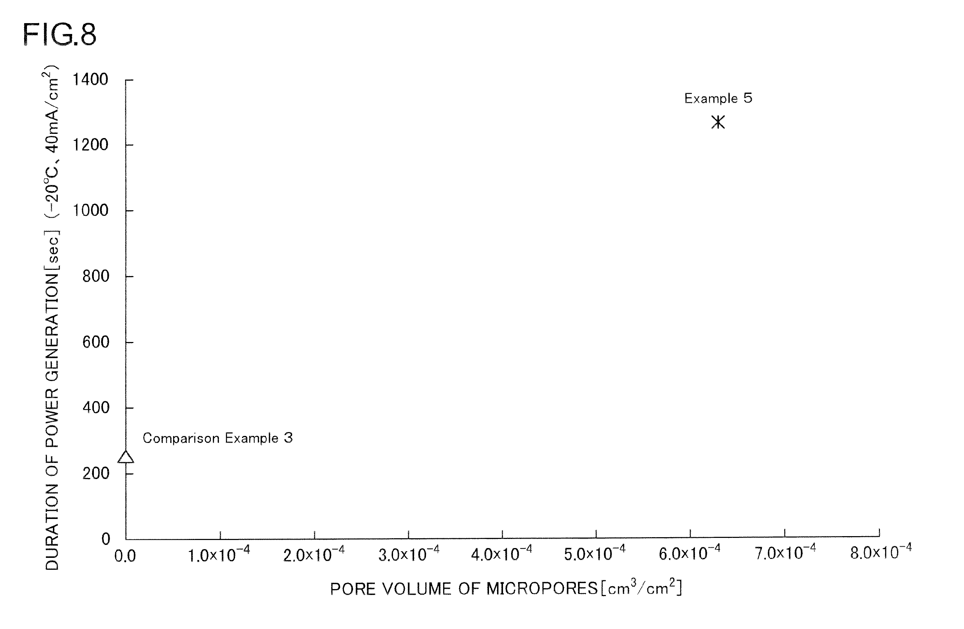

Fig. 7A and Fig. 8 are the graphs showing the relation between the pore volume of micropores and the duration of power generation (-20°C, 40 mA/cm²) in the single-cells for evaluation in Examples and Comparison Examples. It can be confirmed from Fig. 7A and Fig. 8 that the duration period of power generation in the cells of Examples 1-5 in which the pore volumes of micropores in the gas diffusion layer are within the specified range becomes four times longer than that in the cells of Comparison eExamples 1-3 with smaller pore volume of micropores.

Fig. 7B is a graph showing the relation between the pore volume and the duration of power generation (-20°C, 40 mA/cm²) in single-cells for evaluation in Examples and Comparison Examples. Fig. 7B shows that the cell of Comparison Example 2 using the gas diffusion layer with the largest pore volume provides no increase in the power generation duration period in comparison with the cells of Examples 1-4 whose power volumes are smaller, and there is almost no increase in the power generation duration period either even in comparison with that of the cell of Comparison eExample 1 which contains no water-absorbent material. From these results, we learned that the below-freezing-point-start-up capability of a cell depends very little on the size of the pore volume of the gas diffusion layer, and that the size of the pore volume of micropores is the key factor.

Fig. 9-Fig. 10 are the graphs showing the relation between the pore volume of micropores and the duration of power generation (-20°C, 80 mA/cm²) in the single-cells for evaluation in Examples and Comparison Examples. Fig. 11-Fig. 12 are the graphs showing the relation between the pore volume of micropores and the duration of power generation (-20°C, 100 mA/cm²) in the single-cells for evaluation in Examples and Comparison Examples.

As can be seen from Fig. 9-Fig. 12, the duration period of power generation is shorter in case that the electric current density is 80 mA/cm² (Figs. 9-10) or 100 mA/cm² (Figs. 11-12) compared to that in case the electric current density is 40 mA/cm² (Figs. 7-8), as the amount of water generated increases. It was confirmed that the duration period of power generation in the cells of Examples 1, 2 and 5 having the pore volumes of micropores greater than 3.6 x 10⁻⁴ cm³/cm² are longer in comparison with those of the cells of Comparison Example 1 and 3 containing no water-absorbent material. In other words, it was confirmed that the duration period of power generation is 2.5 times or longer if the electric current density is 80 mA/cm², or 1.3 times or longer if the electric current density is 100 mA/cm².

### [Example 6]

### (1) Preparation of the gas diffusion layer of the anode.

The mass ratio of powder of activated carbon (average particle diameter: 3 µm; raw material: coconut husk; micropore volume: 0.85 cm³/g): carbon black: PTFE in the microporous layer was chosen to be 8:0:2. A gas diffusion layer for the anode was prepared by the same method as the one employed in Example 1 (1), except that a microporous layer (thickness: 37 µm, amount per unit area: 18 g/cm²) containing the water-absorbent material on the gas diffusion substrate was formed. When the pore volume of micropores of the gas diffusion layer was calculated similarly in Example 1, the pore volume of micropores was 6.3 x 10⁻⁴ cm³/cm².

### (2) Membrane electrode assembly (MEA) and assembling single-cells

PRIMEA (registered trademark) 5580 (available from Japan Gore-Tex) was prepared as the assembly consisting of the polymer electrolyte membrane being sandwiched by a pair of catalyst layers (in a state where the catalyst layers are coated on the electrolyte membrane) . CARBEL (registered trademark) CNW (available from Japan GORE-TEX; thickness: 230 µm) was prepared as the gas diffusion layer (with MPL) of the cathode.

The single cell for evaluation was prepared the same way in Example 1 (2) except that the particular assembly and the gas diffusion layer prepared as above were used.

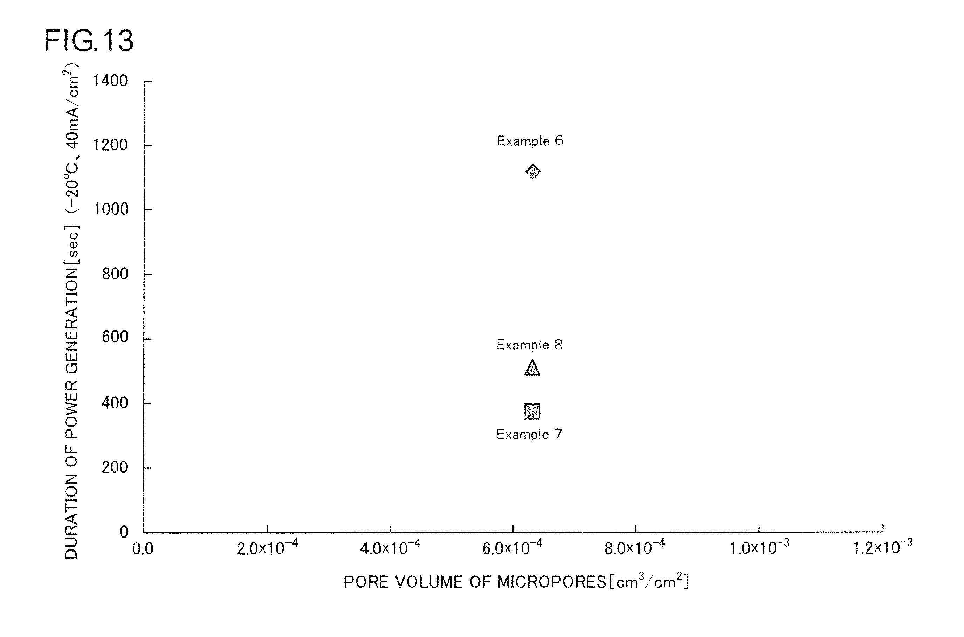

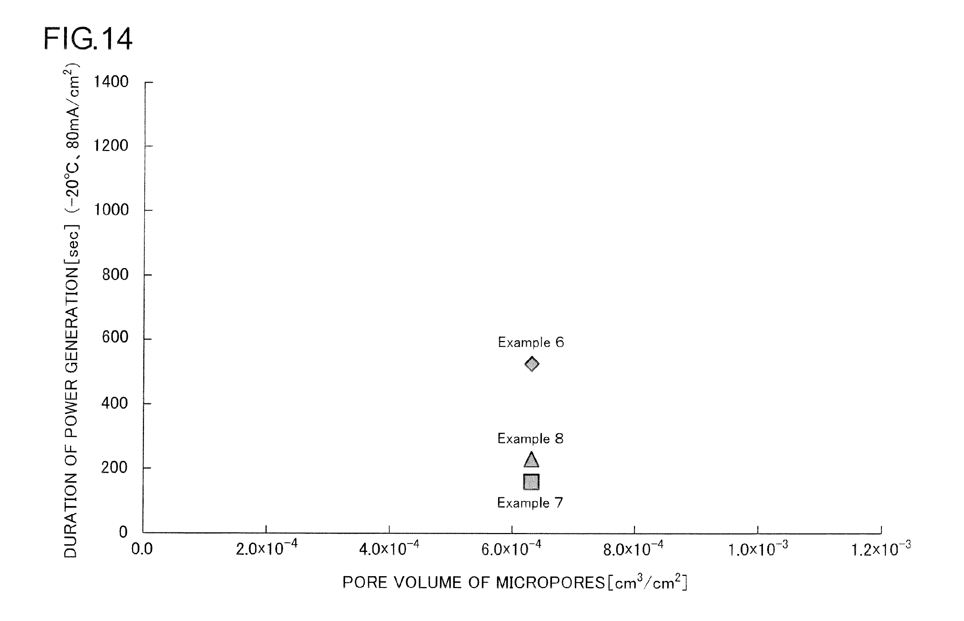

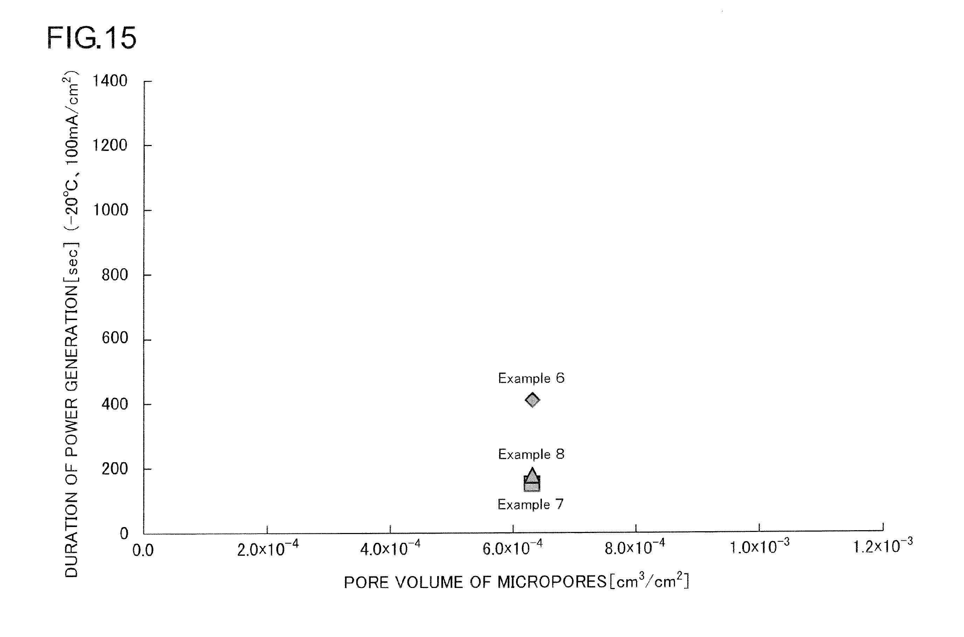

The below-freezing-point-start-up capability was evaluated for the single-cell for evaluation prepared as such in a similar manner as described above. The evaluation result is shown in Fig.13 when the current density is 40 mA/cm², is shown in Fig. 14 when the current density is 80 mA/cm², and is shown in Fig. 15 when the current density is 100 mA/cm², respectively.

### [Example 7]

### (1) Preparation of the gas diffusion layer of the cathode.

The mass ratio of powder of activated carbon (average particle diameter: 3 µm; raw material: coconut husk; micropore volume: 0.85 cm³/g): carbon black: PTFE in the microporous layer was chosen to be 8:0:2. A gas diffusion layer for the cathode was prepared by the same method as the one employed in Example 1 (1), except that a microporous layer (thickness: 46 µm, amount per unit area: 19 g/cm²) containing the water-absorbent material on the gas diffusion substrate was formed. When the pore volume of micropores of the gas diffusion layer was calculated similarly in Example 1, the pore volume of micropores was 6.3 x 10⁻⁴ cm³/cm².

### (2) Membrane electrode assembly (MEA) and assembling single-cells

PRIMEA (registered trademark) 5580 (available from Japan GORE-TEX) was prepared as the assembly consisting of the polymer electrolyte membrane being sandwiched by a pair of catalyst layers (in a state where the catalyst layers are coated on the electrolyte membrane) . CARBEL (registered trademark) CNW (available from Japan GORE-TEX; thickness: 230 µm) was prepared as the gas diffusion layer (with MPL) of the anode.

The single cell for evaluation was prepared the same way in Example 1 (2) except that the particular assembly and the gas diffusion layer prepared as above were used.

The below-freezing-point-start-up capability was evaluated for the single-cell for evaluation prepared as such in a similar manner as described above. The evaluation result is shown in Fig. 13 when the current density is 40 mA/cm², is shown in Fig.14 when the current density is 80 mA/cm², and is shown in Fig. 15 when the current density is 100 mA/cm², respectively.

### [Example 8]

### (1) Preparation of the gas diffusion layers of the anode and cathode.

The mass ratio of powder of activated carbon (average particle diameter: 3 µm; raw material: coconut husk; micropore volume: 0.85 cm³/g): carbon black: PTFE in the microporous layer was chosen to be 8:0:2. A gas diffusion layers for the anode and cathode were prepared by the same method as the one employed in Example 1 (1), except that a microporous layer (thickness: 43 µm, amount per unit area: 18 g/cm²) containing the water-absorbent material on the gas diffusion substrate was formed. When the pore volume of micropores of the gas diffusion layer was calculated similarly in Example 1, the pore volume of micropores was 6.3 x 10⁻⁴ cm³/cm².

### (2) Membrane electrode assembly (MEA) and assembling single-cells.

PRIMEA (registered trademark) 5580 (available from Japan GORE-TEX) was prepared as the assembly consisting of the polymer electrolyte membrane being sandwiched by a pair of catalyst layers (in a state where the catalyst layers are coated on the electrolyte membrane).

The single cell for evaluation was prepared the same way in Example 1 (2) except that the particular assembly and the gas diffusion layer prepared as above were used.

The below-freezing-point-start-up capability was evaluated for the single-cell for evaluation prepared as such in a similar manner as described above. The evaluation result is shown in Fig. 13 when the current density is 40 mA/cm², is shown in Fig.14 when the current density is 80 mA/cm², and is shown in Fig. 15 when the current density is 100 mA/cm², respectively.

Fig. 13 is a graph showing the relation between the pore volume of micropores and the duration of power generation (-20°C, 40 mA/cm²) in single-cells for evaluation in various examples. Fig. 14 is a graph showing the relation between the pore volume of micropores and the duration of power generation (-20°C, 80 mA/cm²) in single-cells for evaluation in various examples. Fig. 15 is a graph showing the relation between the pore volume of micropores and the duration of power generation (-20°C, 100 mA/cm²) in single-cells for evaluation in various Examples.

As can be seen from Figs. 13-Fig. 15, the duration period of power generation is shorter in case that the electric current density is 80 mA/cm² (Fig. 14) or 100 mA/cm² (Fig. 15) compared to that in case that the electric current density is 40 mA/cm² (Fig. 13), as the amount of water generated increases. Also, as shown in Figs. 13-15, the duration period of power generation was compared when the gas diffusion layer, whose pore volume of micropores is 6.3 x 10⁻⁴ cm³/cm², has only the anode gas diffusion layer (Example 6), only the cathode gas diffusion layer (Example 7), and both the anode and cathode gas diffusion layers (Example 8). As a result, it was observed that the longest duration period of power generation resulted for the single-cell for evaluation of Example 6 having only the anode gas diffusion layer. Also, it was confirmed that the duration period of power generation of the single-cell for evaluation of Example 7 having only the cathode gas diffusion layer is longer compared to that of Comparison Examples, but it is shorter than the duration period of power generation of the single-cell for evaluation of Example 6 having only the anode gas diffusion layer. Also, it was confirmed that the duration period of power generation of the single-cell for evaluation of Example 8 having both the anode and cathode gas diffusion layers is shorter compared to that of Example 6 having only the anode gas diffusion layer, but it is longer than the duration period of power generation of the single-cell for evaluation of Example 7 having only the cathode gas diffusion layer.

Moreover, the present application is based on the Japanese Patent Application No. 2009-112320 filed on May 1, 2009, the disclosure content thereof is referenced here and made a part of hereof as a whole.

### [Description of the codes]

- 1: Polymer electrolyte fuel cell (PEFC)
- 2: Solid polymer electrolyte membrane
- 3a: Anode catalyst layer
- 3c: Cathode catalyst layer
- 4: Gas diffusion layer
- 4a: Anode gas diffusion layer
- 4c: Cathode gas diffusion layer
- 5: 200 Separator
- 5a: Anode separator
- 5c: Cathode separator
- 6a: Anode gas passage
- 6c: Cathode gas passage
- 7: Refrigerant passage
- 8a: Anode gas diffusion electrode
- 8c: Cathode gas diffusion electrode
- 10: Membrane electrode assembly (MEA)
- 20: Microporous layer
- 30: Substrate layer
- 41: Water-absorbent material
- 42: Binder
- 42a: Granular conductive support (conductive support particle)
- 42b: Fibrous conductive support (conductive support fiber)
- 44: Microporous membrane
- 45: Gas diffusion substrate
- 50: Microporous layer
- 100: Fuel cell electric vehicle
- 101: Fuel cell stack
- 210: Gas diffusion substrate
- 220: Catalyst layer

## Claims

1. A gas diffusion layer for fuel cell having a pore volume of micropores of 2.0 x 10⁻⁴ cm³/cm² or higher.

2. The gas diffusion layer for fuel cell according to claim 1, further comprising a conductive support and a water-absorbent material, said water-absorbent material being supported on said conductive support.

3. The gas diffusion layer for fuel cell according to claim 2, comprising a microporous layer, wherein said water-absorbent material is supported on a granular conductive support.

4. The gas diffusion layer for fuel cell according to claim 3, wherein said microporous layer is laminated on a substrate layer comprising a gas diffusion substrate.

5. The gas diffusion layer for fuel cell according to claim 2, comprising a substrate layer, wherein said water-absorbent material is supported on a gas diffusion substrate consisting of a fibrous conductive support.

6. The gas diffusion layer for fuel cell according to claim 5, wherein a microporous layer comprising a granular conductive support is laminated on said substrate layer.

7. The gas diffusion layer for fuel cell according to any one of claims 3, 4 and 6, wherein a content of said water-absorbent material is within 10-80% based on total mass of said microporous layer.

8. The gas diffusion layer for fuel cell according to any one of claims 3, 4, 6 and 7, wherein said microporous layer is formed like a sheet.

9. The gas diffusion layer for fuel cell according to any one of claims 1-8, having said pore volume of micropores of 3.6 x 10⁻⁴ cm³/cm³ or higher.

10. The gas diffusion layer for fuel cell according to any one of claims 2-9, wherein said water-absorbent material is activated carbon.

11. A gas diffusion electrode for fuel cell comprising a gas diffusion layer set forth in any one of claims 1-10 and a catalyst layer laminated on said gas diffusion layer.

12. A membrane electrode assembly for fuel cell comprising a polymer electrolyte membrane, and a pair of anode gas diffusion electrode and a cathode gas diffusion electrode sandwiching said membrane, wherein
said anode gas diffusion electrode is the gas diffusion electrode set forth in claim 11.

13. A membrane electrode assembly for fuel cell comprising a polymer electrolyte membrane, a pair of anode gas diffusion electrode and a cathode gas diffusion electrode sandwiching said membrane, wherein
at least either one of said anode gas diffusion electrode or said cathode gas diffusion electrode is the gas diffusion electrode set forth in claim 11.

14. A fuel cell using the gas diffusion layer set forth in any one of claims 1-10, the gas diffusion electrode set forth in claim 11, or the membrane electrode assembly set forth in claim 12 or 13.

15. An electric vehicle installed with a fuel cell set forth in claim 14.
